# EUROPÄISCHE PATENTSCHRIFT

(11) **EP 4 252 337 B1**
(45) Veröffentlichungstag und Bekanntmachung des Hinweises auf die Patenterteilung: **11.06.2025**
(21) Anmeldenummer: 21867869.6
(22) Anmeldetag: 09.12.2021
(51) Int. Cl.: H02K 3/52, H02K 5/24, H02K 5/04, H02K 11/33

(54) **ELEKTROMOTOR**
ELECTRIC MOTOR
MOTEUR ÉLECTRIQUE

(30) Priorität: 09.12.2020 DE 102020215587; 09.12.2020 DE 102020215588; 01.02.2021 DE 102021200885
(43) Veröffentlichungstag der Anmeldung: 04.10.2023
(73) Patentinhaber: Brose Fahrzeugteile SE & Co. Kommanditgesellschaft, Würzburg, 97076 Würzburg (DE)
(72) Erfinder: GEILING, Christian, 97234 Reichenberg (DE); HAUCK, Peter, 97218 Gerbrunn (DE); OBENDORFER, Moritz, 97072 Würzburg (DE); THURMANN, Patrick, 97070 Würzburg (DE)
(74) Vertreter: FDST Patentanwälte
(86) Internationale Anmeldenummer: PCT/DE2021/100990
(87) Internationale Veröffentlichungsnummer: WO 2022/122087

(56) Entgegenhaltungen:
- CN-A- 111 342 587
- DE-A1- 102015 200 086
- DE-A1- 102017 205 532
- DE-A1- 102019 200 616
- DE-A1- 102019 202 859
- US-A1- 2015 229 178
- US-A1- 2017 237 312
- US-A1- 2018 316 239
- US-A1- 2019 305 625
- US-A1- 2020 195 083

## Beschreibung

Die Erfindung betrifft einen Elektromotor eines Kraftfahrzeugs sowie ein Verfahren zur Montage eines Elektromotors als auch ein Nebenaggregat eines Kraftfahrzeugs, mit einem Elektromotor. Der Elektromotor weist jeweils einen Stator, einen Rotor sowie eine Schalteinheit und einen Kontaktadapter auf.

Kraftfahrzeuge, wie Personenkraftwagen (Pkw), weisen eine Vielzahl an Nebenaggregaten auf, die nicht direkt dem Vortrieb des Kraftfahrzeugs dienen. Derartige Nebenaggregate sind beispielsweise für den Betrieb des Hauptantriebs erforderlich, oder dienen der Bereitstellung oder Erhöhung eines Komforts für den Nutzer des Kraftfahrzeugs. Ein derartiges Nebenaggregat ist beispielsweise ein elektromotorischer Verstellantrieb, wie ein elektromotorischer Fensterheber. Alternativ ist das Nebenaggregat beispielsweise ein elektromotorischer Kältemittelverdichter, der insbesondere ein Bestandteil eines Kältemittelkreislaufs des Kraftfahrzeugs ist.

In einer weiteren Alternative ist der Elektromotor ein Bestandteil des Bremssystems des Kraftfahrzeugs. Hierbei ist der Elektromotor beispielsweise ein Bestandteil eines Antiblockiersystems, einer Antischlupfregelung oder einer elektromotorisch betätigten Bremskraftverteilung. Es ist jedoch auch möglich, den Elektromotor in einem Bremskrafterzeuger einzusetzen. Hierbei wird mittels des Elektromotors insbesondere eine Hydraulikpumpe betrieben, sodass ein Druck in einem Bremsflüssigkeitssystem erhöht wird. Die Betätigung des Elektromotors erfolgt anhand von elektrischen Signalen und der Bremskrafterzeuger ist mechanisch von einem Fußpedal oder sonstigen Eingabegeräten gelöst. Daher kann der Elektromotor unabhängig von einer Betätigung oder sonstigen Eingaben eines Nutzers betrieben werden. Folglich ist es möglich, mittels des Bremskrafterzeugers das Kraftfahrzeug abzubremsen, auch wenn dies in einer Notsituation durch einen Nutzer nicht mehr möglich ist.

Damit ein Verschleiß möglichst gering ist, ist der Elektromotor meist als bürstenloser Gleichstrommotor (BLDC) ausgestaltet. Hierbei weist der Elektromotor einen Rotor auf, der mehrere Permanentmagneten umfasst, und der drehfest an einer Rotorwelle befestigtes. Die Rotorwelle ist mittels eines oder mehrerer Lager drehbar um eine Rotorachse gelagert, wobei jedes Lager an einem jeweiligen Lagerschild befestigt ist. Der Stator weist mehrere elektrische Spulen auf, die mittels eines auf den Stator aufgesetzten Schalteinheit, die auch als Verschaltungsring bezeichnet ist, zu drei Phasen einer Statorwicklung elektrisch verschaltet sind. Hierbei sind die einzelnen Phasenanschlüsse bezüglich der Rotorachse um 120° versetzt, und mit diesen ist üblicherweise ein Anschluss elektrisch kontaktiert, der durch eine jeweilige Öffnung des Lagerschilds geführt ist.

In US 2020/195083 A1 ist ein Elektromotor mit einer Stromschieneneinheit offenbart, die mehrere Stromschienen umfasst. Die Stromschienen sind jeweils mit Spulen elektrisch verbunden und auf einer Lagerschildseite der Stromschieneneinheit durch mehreren Anschlussdurchgangslöcher im Lageschild eingeführt,

DE 10 2019 200 616 A1 zeigt einen Stator mit einem Statorgrundkörper, der Statorzähne zur Aufnahme einer elektrischen Wicklung aufweist. Der Statorgrundkörper ist in ein zylindrisches Gehäuse eingesetzt, das an einem Ende ein Lagerschild aufweist. Die elektrische Wicklung ist zu deren Bestromung mit einer Anschlussplatte, und an der Anschlussplatte sind mehrere axiale Fortsätze angeordnet, mittels denen Anschlusspins durch axiale Durchbrüche im Lagerschild hindurchgeführt sind.

Aus US 2018/316239 A1 ist ein Motor bekannt, der einen Rotor mit einer Welle und einen Stator umfasst, der so angeordnet ist, dass er dem Rotor in einer radialen Richtung gegenüberliegt.

In DE 10 2019 202 859 A1 ist eine elektrische Maschine gezeigt. An einem Lagerschild ist ein Signalsensor angeordnet, wobei der Signalsensor an der einem Rotor gegenüberliegenden Innenseite des Lagerschilds befestigt ist und axial unmittelbar gegenüber einem Signalgeber angeordnet ist.

Aus DE 10 2017 205 532 A1 ist ein Stator bekannt. Es ist auf einem Wicklungsträger eine Isolationsmaske angeordnet, die eine elektrische Spule gegenüber dem Wicklungsträger isoliert. Die Isolationsmaske erstreckt sich mit einem axialen Fortsatz axial über ein Jochelement hinaus, wobei der axiale Fortsatz mit einem in Umfangsrichtung verlaufenden Bund radial an einer Innenwand eines Polgehäuses anliegt.

In DE 10 2015 200 086 A1 ist eine Verschaltungsplatte für einen Stator einer elektrischen Maschine offenbart. Die Verschaltungsplatte weist Leiterelemente auf, die einerseits axiale Anschluss-Stecker für Verbindungs-Stecker und andererseits Befestigungsabschnitte umfassen, deren Enden einen abgeflachten - insbesondere näherungsweise einen rechteckigen - Querschnitt aufweisen, wobei die Enden einen runden Verbindungsdraht einer Wicklung kontaktierend umschließen.

Der Erfindung liegt die Aufgabe zugrunde, einen besonders geeigneten Elektromotor eines Kraftfahrzeugs sowie ein besonders geeignetes Verfahren zur Montage eines Elektromotors als auch ein besonders geeignetes Nebenaggregat eines Kraftfahrzeugs anzugeben, wobei vorteilhafterweise ein Ausschuss reduziert und/oder eine Montage vereinfacht ist.

Hinsichtlich des Elektromotors wird diese Aufgabe durch die Merkmale des Anspruchs 1, hinsichtlich des Verfahrens durch die Merkmale des Anspruchs 9 und hinsichtlich des Nebenaggregats durch die Merkmale des Anspruchs 10 erfindungsgemäß gelöst. Vorteilhafte Weiterbildungen und Ausgestaltungen sind Gegenstand der jeweiligen Unteransprüche.

Der Elektromotor ist ein Bestandteil eines Kraftfahrzeugs. Hierfür ist der Elektromotor geeignet, insbesondere vorgesehen und eingerichtet. Mit anderen Worten ist im bestimmungsgemäßen Zustand der Elektromotor an weiteren Bestandteilen des Kraftfahrzeugs montiert. Hierfür ist der Elektromotor geeignet, insbesondere vorgesehen und eingerichtet. Das Kraftfahrzeug ist insbesondere landgebunden und vorzugsweise mehrspurig ausgestaltet. Hierbei ist es geeigneterweise möglich, das Kraftfahrzeug im Wesentlichen frei zu positionieren, zum Beispiel auf einer entsprechenden Fahrbahn. Hierfür weist das Kraftfahrzeug insbesondere entsprechende Räder auf. Zusammenfassend ist es bevorzugt möglich, das Kraftfahrzeug im Wesentlichen unabhängig von sonstigen Gegebenheiten an Land zu positionieren. Mit anderen Worten ist das Kraftfahrzeug geeigneterweise nicht schienengeführt. Vorzugsweise ist das Kraftfahrzeug ein Personenkraftwagen (Pkw) oder ein Nutzkraftwagen, wie ein Lastkraftwagen (Lkw) oder Bus.

Beispielsweise ist der Elektromotor ein Bestandteil eines Hauptantriebs des Kraftfahrzeugs und dient somit dem (direkten) Vortrieb des Kraftfahrzeugs. Besonders bevorzugt jedoch ist der Elektromotor ein Bestandteil eines Nebenaggregats des Kraftfahrzeugs. Das Nebenaggregat dient im bestimmungsgemäßen Gebrauch nicht direkt dem Vortrieb des Kraftfahrzeugs und stellt somit keinen Hauptantrieb des Kraftfahrzeugs dar. Der Elektromotor weist daher bevorzugt eine Nenn- oder Maximalleistung zwischen 100 W und 1000 W, vorzugsweise zwischen 300 W und 700 W und beispielsweise zwischen 400 W und 500 W auf. Beispielsweise dient dabei das Nebenaggregat dem Betrieb des Hauptantriebs oder der Bereitstellung von für den Betrieb des Kraftfahrzeugs erforderlichen Funktionen, die nicht direkt dem Vortrieb des Kraftfahrzeugs dienen. Alternativ hierzu erfolgt mittels des Nebenaggregats eine Erhöhung eines Komforts oder die Bereitstellung von Komfortfunktionen.

Das Nebenaggregat ist zum Beispiel ein elektromotorischer Verstellantrieb, wie ein elektromotorischer Fensterheber. Alternativ ist das Nebenaggregat beispielsweise ein elektromotorischer Kältemittelverdichter, der insbesondere ein Bestandteil eines Kältemittelkreislaufs des Kraftfahrzeugs ist. **In** einer weiteren Alternative ist das Nebenaggregat eine elektromotorische Pumpe, wie eine Wasserpumpe. Geeigneterweise ist die elektromotorische Pumpe eine Schmiermittelpumpe, wie eine Motorölpumpe oder eine Getriebeölpumpe. Hierbei ist mittels des Elektromotors zum Beispiel jeweils ein Pumpenrad angetrieben, das auf die zu pumpende Flüssigkeit angepasst ist. In einer weiteren Alternative ist der Elektromotor ein Bestandteil eines Lüfters, wie eines Kühlerlüfters oder eines Gebläses, die somit das jeweilige Nebenaggregat darstellen. In einer Alternative ist das Nebenaggregat eine Lenkunterstützung, und mittels des Elektromotors ist insbesondere eine Lenkstange angetrieben oder es wird zumindest ein Lenkeinschlag von lenkbar ausgestalteten Rädern des Kraftfahrzeugs mittels des Elektromotors eingestellt oder deren Einstellung unterstützt.

In einer weiteren Alternative ist das Nebenaggregat ein Bremssystem oder ein Teil des Bremssystems des Kraftfahrzeugs. Hierbei ist der Elektromotor beispielsweise ein Bestandteil eines Antiblockiersystems, einer Antischlupfregelung oder einer elektromotorisch betätigten Bremskraftverteilung. Besonders bevorzugt ist das Nebenaggregat ein Bremskrafterzeuger. Dieser ist vorzugsweise elektrohydraulisch ausgestaltet, wobei mittels des Elektromotors insbesondere eine Hydraulikpumpe betrieben und/oder etwaige Ventile betätigt sind. Alternativ hierzu wird mittels des Elektromotors ein Arbeitskolben bewegt. Der Arbeitskolben ist insbesondere in einem Pumpraum angeordnet, in dem bei Betrieb eine Bremsflüssigkeit vorhanden ist. Bei linearem Bewegen des Arbeitskolben in dem Pumpraum wird, je nach Bewegungsrichtung, die Bremsflüssigkeit aus dem Pumpraum gedrückt oder hineingesogen. Vorzugsweise sind etwaige Bremskolben von Bremsen eines Bremssystems des Kraftfahrzeugs hydraulisch mit dem Pumpraum verbunden, sodass bei Drücken der Bremsflüssigkeit aus dem Pumpraum die Bremsen betätigt werden.

Zum Beispiel ist an dem Arbeitskolben eine Eingangsstange befestigt, die zweckmäßigerweise zumindest abschnittsweise umfangsseitig mit einem Gewinde versehen, auf das ein innenverzahntes Antriebszahnrad gesetzt ist. Mittels der Eingangsstange und des Antriebszahnrads ist hierbei eine Art Spindel gebildet. Das Antriebszahnrad ist zweckmäßigerweise mittels des Elektromotors angetrieben, beispielsweise direkt oder bevorzugt über ein Getriebe. Bei Bestromung des Elektromotors wird somit über das Antriebszahnrad in die Eingangsstange Kraft eingeleitet und folglich auch auf den Arbeitskolben.

Vorzugsweise umfasst der Bremskrafterzeuger einen Sensor, mittels dessen bei Betrieb eine Betätigung eines als Bremspedal wirkenden Fußpedals erfasst wird. In Abhängigkeit davon wird der Elektromotor bestromt. Dabei ist zwischen dem Fußpedal und dem Arbeitskolben keine mechanische Verbindung vorhanden, und das Fußpedal ist beispielsweise kein Bestandteil des Bremskrafterzeugers. Geeigneterweise umfasst der Bremskrafterzeuger ein Steuergerät, mittels dessen der Sensor ausgelesen und die Bestromung des Elektromotors eingestellt wird. In einer Weiterbildung wird mittels des Steuergeräts der Elektromotor unabhängig von einer tatsächlichen Betätigung des Fußpedals bestromt, vorzugsweise in Abhängigkeit einer bereitgestellten Aufforderung, die insbesondere über ein etwaiges Bussystem übermittelt wird. Die Aufforderung wird dabei beispielsweise von einem Assistenzsystem des Kraftfahrzeugs oder eines Bordcomputers des Kraftfahrzeugs erstellt. Insbesondere wird hierbei die Aufforderung in Abhängigkeit von bestimmten Fahrsituationen erstellt, zum Beispiel von einem Notbremsassistenten. Alternativ oder in Kombination hierzu ist das Kraftfahrzeug teilweise oder vollständig autonom ausgestaltet, sodass eine Fortbewegung unabhängig von einer Steuerung eines Nutzers erfolgt. Die Aufforderung wird dabei insbesondere durch einen sogenannten Autopiloten erstellt.

In einer weiteren Alternative ist der Bremskraftfahrzeuge beispielsweise als elektromechanischer Bremskraftverstärker ausgestaltet. Dabei ist zum Beispiel die Eingangsstange mittels einer Mechanik an dem Fußpedal angebunden, sodass diese bei einer Betätigung des Fußpedals direkt verstellt wird. In diesem Fall dient der Elektromotor bei Normalbetrieb insbesondere der Unterstützung der Bewegung des Fußpedals, weswegen eine von einem Nutzer aufzubringende Kraft reduziert ist. Alternativ oder in Kombination hierzu erfolgt beispielsweise eine Anpassung der aufzubringenden Kraft, sodass diese zum Beispiel stets konstant ist, unabhängig von der aktuellen Fahrsituation. Jedoch ist es auch hier bevorzugt möglich, den Arbeitskolben unabhängig von der Betätigung des Fußpedals zu bewegen, nämlich indem der Elektromotor entsprechend bestromt wird. Somit ist auch hier ein Anwendungsgebiet vergrößert.

Insbesondere ist der Elektromotor als bürstenloser Gleichstrommotor (BLDC) und/oder Synchronmotor ausgestaltet. Der Elektromotor weist einen Stator und der Rotor auf, die konzentrisch zu einer Motorachse in einem Motorgehäuse angeordnet sind. Das Motorgehäuse ist dabei mittels eines Lagerschilds verschlossen, das senkrecht zur Motorachse angeordnet ist. Beispielsweise umfasst der Rotor ein Blechpaket, in das Permanentmagneten eingebettet oder an dem diese gehalten sind. Geeigneterweise umfasst der Rotor eine Rotorwelle, die bevorzugt entlang der Motorachse, die auch als Rotorachse bezeichnet ist, angeordnet ist. Die Rotorwelle, oder zumindest der Rotor, ist geeigneterweise mittels eines oder mehrerer Lager drehbar gelagert, wobei zumindest eines der Lager zweckmäßigerweise an dem Lagerschild angebunden ist. Hierbei steht ein Teil der Rotorwelle des Rotors über das Lagerschild über, sodass dieser Teil außerhalb des Motorgehäuses angeordnet ist, oder die Rotorwelle ist zum Beispiel kein Bestandteil des Rotors. Sofern das andere Lager vorhanden ist, ist diese vorzugsweise einem anderen Lagerschild zugeordnet, sodass das Motorgehäuse beidseitig mittels jeweils eines der Lagerschilde verschlossen ist. Mit anderen Worten ist das Motorgehäuse zumindest teilweise hohlzylindrisch ausgestaltet. Alternativ hierzu ist das Motorgehäuse topfförmig, und das eine der Lager ist an einem Topfboden des Motorgehäuses befestigt, der somit die Aufgabe des einen Lagerschilds übernimmt. Bei einem derartigen Motorgehäuse ist eine Dichtheit erhöht und eine Montage in kürzerer Zeit möglich. Auch ist eine Ausrichtung vereinfacht. Da sich der Rotor und der Stator in dem Motorgehäuse befinden, sind diese mittels des Motorgehäuses und des Lagerschilds vor Umwelteinflüssen geschützt, sodass eine Robustheit erhöht ist. Vorzugsweise ist hierfür das mit dem Lagerschild verschlossene Motorgehäuse fluiddicht ausgestaltet.

Beispielsweise umgibt der Stator den Rotor umfangsseitig, sodass der Elektromotor als Innenläufer ausgestaltet ist. Geeigneterweise ist dabei der Stator zumindest teilweise hohlzylindrisch ausgestaltet. Der Stator weist eine Statorwicklung auf. Vorzugsweise umfasst die Statorwicklung mehrere elektrische Spulen auf, die vorzugsweise aus einem Lackdraht erstellt sind, beispielsweise einem Aluminiumlackdraht oder Kupferlackdraht. Vorzugsweise sind jeweils zwei der elektrischen Spulen mittels eines gemeinsamen Drahts gebildet und somit mittels eines Drahtabschnitts verbunden, sodass die jeweiligen beiden elektrischen Spulen elektrisch in Reihe geschaltet sind. Insbesondere weist der Stator zwischen sechs derartigen elektrischen Spulen und zwanzig elektrischen Spulen und geeigneterweise zwölf elektrische Spulen auf. Zweckmäßigerweise ist jede der elektrischen Spulen, die auch lediglich als Spule bezeichnet ist, auf einen jeweils zugeordneten Statorzahn gewickelt. Die Statorzähne sind vorzugsweise mittels eines gemeinsamen Blechpakets des Stators gebildet. Mittels der elektrischen Spulen ist jeweils ein Elektromagnet gebildet, oder der jeweilige Elektromagnet umfasst zumindest zusätzlich noch den jeweiligen Statorzahn. Zusammenfassend sind mittels der Statorwicklung zumindest teilweise mehrere Elektromagneten gebildet.

Der Elektromotor umfasst ferner eine Schalteinheit, die elektrisch mit der Statorwicklung kontaktiert ist. Zum Beispiel ist dabei die Schalteinheit mit der Stator Wicklung verschweißt oder verlötet. Alternativ hierzu weist die Schalteinheit beispielsweise einen Haken oder dergleichen auf, in den zumindest ein Teil des die Statorwicklung bildenden etwaigen Lackdrahts eingelegt ist. Mittels der Schalteinheit sind dabei bevorzugt die einzelnen elektrischen Spulen der Statorwicklung verschaltet. Vorzugsweise sind dabei die elektrischen Spulen zu mehreren Phasen verschaltet, wobei geeigneterweise jeder der (elektrischen) Phasen die gleiche Anzahl an elektrischen Spulen zugeordnet ist. Hierbei werden, wenn eine der Phasen bei Betrieb bestromt wird, sämtliche elektrischen Spulen dieser Phase bestromt. Insbesondere sind die elektrischen Spulen der gleichen Phase elektrisch parallel oder in Reihe geschaltet. Zum Beispiel umfasst der Stator zwei derartige Phasen, und der Elektromotor ist somit zweiphasig, oder bevorzugt drei derartige Phasen, sodass der Elektromotor dreiphasig ausgestaltet ist. Die Phasen selbst sind beispielsweise miteinander zu einer Dreiecks- oder Sternschaltung kontaktiert. Mit anderen Worten ist die Statorwicklung somit nach Art einer Dreiecks-oder Sternschaltung ausgestaltet.

Zum Verschalten der einzelnen elektrischen Spulen weist die Schalteinheit zweckmäßigerweise eine oder mehrere zueinander separate Stromschienen auf, die im Montagezustand insbesondere mit entsprechenden Enden der jeweiligen elektrischen Spule kontaktiert sind. Hierbei liegen diese beispielsweise lediglich aneinander an oder sind aneinander befestigt, vorzugsweise mittels Schweißens oder Hartlötens. Geeigneterweise sind die einzelnen Stromschienen der Schalteinheit an einem Körper der Schalteinheit gehalten, der bevorzugt aus einem Kunststoff gefertigt ist. Auf diese Weise ist ein elektrischer Kurzschluss zwischen den einzelnen Stromschienen vermieden.

Die Schalteinheit ist auf den Stator aufgesetzt. Infolgedessen befinden sich die Schalteinheit ebenfalls innerhalb des Motorgehäuses und ist somit mittels dessen geschützt. Die Schalteinheit befindet sich insbesondere an einem Ende des Stators. Vorzugsweise ist die Schalteinheit auf eine Stirnseite des Stators aufgesetzt und ist somit entlang der Motorachse zu dem Stator versetzt. Zweckmäßigerweise liegt die Schalteinheit, vorzugsweise der etwaige Körper, mechanisch direkt an dem Stator an, sodass eine Stabilität und Robustheit erhöht sind. Die Schalteinheit ist geeigneterweise deckungsgleich zu dem Stator angeordnet, sodass ein Platzbedarf verringert ist. Bevorzugt ist die Schalteinheit ringförmig ausgestaltet und/oder senkrecht zur Motorachse angeordnet, weswegen ein Platzbedarf weiter verringert ist. Zweckmäßigerweise ist die Schalteinheit an dem Stator befestigt, beispielsweise mittels Klebstoffs, Clipsen oder Schrauben. Alternativ hierzu erfolgt die Befestigung mittels Klemmens. In einer weiteren Alternative liegt die Schalteinheit lediglich lose auf dem Stator auf.

Der Elektromotor umfasst ferner einen Kontaktadapter für einen elektrischen Motoranschluss. Mit anderen Worten ist der Kontaktadapter geeignet, zweckmäßigerweise vorgesehen und eingerichtet, mit dem Motoranschluss elektrisch kontaktiert zu werden, sodass eine Bestromung des Elektromotors über den Motoranschluss erfolgen kann. Mit anderen Worten dient der Kontaktadapter der Aufnahme des elektrischen Motoranschlusses sowie der elektrischen Kontaktierung hiermit. Dabei ist beispielsweise der (elektrische) Motoranschluss ein Bestandteil einer etwaigen Steuerung, insbesondere des etwaigen Nebenaggregats, oder der Motoranschluss ist ein Bestandteil des Elektromotors, insbesondere einer Elektronik des Elektromotors. Besonders bevorzugt ist eine elektrische Brückenschaltung mit dem Motoranschluss elektrisch kontaktiert.

Der Kontaktadapter ist an der Schalteinheit angebunden und wird somit mittels dieser stabilisiert. Mit anderen Worten wird anhand der Schalteinheit der Kontaktadapter gehalten, sodass insbesondere ein Ablösen dessen verhindert ist. Somit erfolgt zumindest teilweise eine Vorgabe der Position des Kontaktadapters mittels der Schalteinheit. Beispielsweise ist der Kontaktadapter an der Schalteinheit befestigt. Ferner ist der Kontaktadapter mit der Schalteinheit elektrisch kontaktiert und vorzugsweise mittels der Schalteinheit mit der Statorwicklung. Besonders bevorzugt umfasst der Kontaktadapter einen oder mehrere Steckerkontakte, wobei jeder der etwaigen Phasen der Statorwicklung geeigneterweise zumindest einer der Steckerkontakte zugeordnet und damit elektrisch kontaktiert ist.

Der Kontaktadapter umfasst ferner ein Steckeranschlusses, der zweckmäßigerweise die etwaigen Steckerkontakte aufweist. Der Steckeranschluss dient insbesondere der mechanischen Verbindung mit dem Motoranschluss. Vorzugsweise ist der Steckeranschlusses hierfür entsprechend ausgebildet. Der Steckeranschluss ist in einer Öffnung des Lagerschilds angeordnet, sodass dessen Position mittels der Öffnung des Lagerschilds vorgegeben ist. Beispielsweise ist zwischen dem Rand der Öffnung und dem Steckeranschluss ein Spalt gebildet, oder diese liegen zum Beispiel kraftschlüssig aneinander umlaufen an, sodass trotz der Öffnung eine Fluiddichtigkeit gegeben ist. Alternativ hierzu ist zum Beispiel eine Dichtung dazwischen angeordnet. Insbesondere ist der Steckeranschlusses parallel zur Motorachse angeordnet, insbesondere die etwaigen Steckerkontakte.

Aufgrund der Anordnung des Steckeranschlusses in der Öffnung des Lagerschilds ist eine elektrische Kontaktierung der Statorwicklung auch erst nach Befestigen des Lagerschilds an dem Motorgehäuse möglich, sodass der Elektromotor zumindest teilweise vorgefertigt werden kann. Auf diese Weise ist eine Herstellung vereinfacht. Aufgrund der Anordnung des Steckeranschlusses parallel zur Motorachse ist dabei ein Anschluss des Motoranschluss mittels einer Bewegung parallel zur Motorachse möglich, weswegen die Kontaktierung mittels des Motorgehäuses nicht behindert wird. Auf diese Weise ist di Montage des Elektromotors weiter vereinfacht.

Ferner wird mittels der Öffnung die Position des Steckeranschlusses vergleichsweise genau vorgegeben, sodass eine elektrische Kontaktierung mit dem Motoranschluss, der beispielsweise ein Bestandteil einer Elektronik ist und/oder auf einer Leiterplatte angeordnet ist, stets erfolgt, unabhängig von den gewählten Fertigungstoleranzen bei Erstellung des Elektromotors. Es ist dabei lediglich erforderlich, bei der Öffnung des Lagerschilds geringe Fertigungstoleranzen zu wählen, sodass Herstellungskosten verringert und auch eine Herstellung vereinfacht ist. Zudem ist auf diese Weise ein Ausschuss reduziert. Zudem ist es möglich, den Elektromotor in unterschiedlichen Einsatzgebieten oder mit unterschiedlichen Herstellern von Motoranschlüssen zu verwenden. Hierbei ist lediglich ein Austausch des Kontaktadapters erforderlich. Ansonsten können Gleichteile verwendet werden, weswegen Herstellungskosten reduziert sind.

Insbesondere ist der Steckeranschluss mit jeder der etwaigen elektrischen Phasen der Statorwicklung elektrisch kontaktiert. Auf diese Weise ist es möglich, das Lagerschild, mit Ausnahme der Öffnung sowie einer weiteren Öffnung für die etwaige Rotorwelle, geschlossen auszugestalten, sodass eine Dichtigkeit erhöht und eine Robustheit erhöht sind. Ferner ist die elektrische Kontaktierung vereinfacht, und es beispielsweise möglich, die etwaige Elektronik, die den Motoranschluss aufweist, bezüglich der Motorachse versetzt anzuordnen, weswegen ein benötigter Bauraum verringert ist. Besonders bevorzugt ist der Steckeranschluss bezüglich der Motorachse versetzt und ist beispielsweise nicht symmetrisch bezüglich einer radialen Geraden bezüglich der Motorachse angeordnet. Auf diese Weise ist ein Ausnutzen des vorhandenen Platzes weiter verbessert.

Beispielsweise weist der Stator oder bevorzugt die Schalteinheit ein Mittel zum Ausrichten innerhalb des Motorgehäuses bei Montage auf. Auf diese Weise ist sichergestellt, dass der an der Schalteinheit angebundene Kontaktadapter auch tatsächlich innerhalb der Öffnung angeordnet wird, sodass ein Ausschuss weiter verringert ist. Beispielsweise weist der Stator oder besonders bevorzugt die Schalteinheit ein parallel zur Motorachse, jedoch zu dieser versetzt angeordnetes Loch oder eine sonstige Öffnung auf, das zur vorübergehenden Aufnahme eines Werkzeugs dient, mittels dessen die Positionierung erfolgt. Das Werkzeug weist hierfür bevorzugt einen entsprechenden Dorn oder dergleichen zum Einführen in das Loch auf, sodass die Schalteinheit und somit auch der Stator ausgerichtet werden. Hierbei liegt das Werkzeug, geeigneterweise der Dorn, zweckmäßigerweise in dem Loch der Schalteinheit bzw. Stators mittels einer Spielpassung ein. Auf diese Weise erfolgt einerseits eine vergleichsweise genaue Positionierung, wobei andererseits ein Kraftaufwand reduziert ist. Zudem ist auf diese Weise eine Beschädigung der Schalteinheit bzw. des Stators aufgrund der verringerten Krafteinwirkung vermieden.

Das Werkzeug weist vorzugsweise einen weiteren Dorn oder dergleichen auf, der mit entsprechenden Aufnahmen des Motorgehäuses wechselwirken, insbesondere etwaigen Löchern, wie beispielsweise Befestigungslöchern, die zur Aufnahme von Schrauben oder dergleichen zur Befestigung des Motorgehäuses an einem anzutreibenden Bauteil vorgesehen sind. Zusammenfassend greift somit das Werkzeug sowohl an dem Motorgehäuse als auch an der Schalteinheit bzw. dem Stator an, und diese werden folglich entsprechend zueinander ausgerichtet, was die Montage vereinfacht.

Der Steckeranschluss ist schwimmend an der Schalteinheit gelagert. Mit anderen Worten ist eine zumindest geringfügige Bewegung des Steckeranschlusses bezüglich der Schalteinheit ermöglicht, wobei dieser dennoch, vorzugsweise mittels weiterer Bestandteile des Kontaktadapters, an der Schalteinheit angebunden und mit dieser elektrisch kontaktiert ist. Aufgrund der schwimmenden Lagerung ist dabei ein Toleranzausgleich möglich, sodass ein Anordnen des Steckeranschlusses in der Öffnung stets möglich ist, wobei dennoch eine Breite eines Schlitzes zwischen dem Steckeranschluss und dem Rand der Öffnung vergleichsweise klein gewählt werden kann.

Beispielsweise ist die Schalteinheit im Bereich des Steckeranschlusses glatt ausgestaltet. Auf diese Weise wird die Bewegung des Steckeranschlusses aufgrund der schwimmenden Lagerung mittels der Schalteinheit nicht behindert. Auch ist eine Herstellung vereinfacht. Besonders bevorzugt jedoch umfasst die Schalteinheit eine Vertiefung, innerhalb derer der Steckeranschluss mit Spiel angeordnet ist. Hierbei ist mittels der Vertiefung vorgegeben, in welchem Umfang der Steckeranschluss schwimmend gelagert ist. Mit anderen Worten wird mittels der Vertiefung der Verstellweg bei der schwimmenden Lagerung begrenzt, weswegen bei Montage eine Robustheit gegeben und diese folglich vereinfacht ist. Mit anderen mit Folglich dient die Vertiefung der zumindest vorläufigen Positionierung des Steckeranschlusses, und mittels dieser wird sichergestellt, dass ein Verdrehen des Steckeranschlusses bezüglich einer parallel zur Motorachse verlaufenden Achse unterbleibt oder zumindest begrenzt ist. Daher ist ein Einführen des Steckeranschlusses in die Öffnung des Lagerschilds bei Montage vereinfacht. Zusammenfassend wird mittels der Vertiefung sichergestellt, dass ein Verdrehen oder auch ein Verkippen des Steckeranschlusses unterbleibt oder zumindest auf ein handhabbares Maß verringert ist.

Alternativ oder in Kombination hierzu weist der Steckeranschluss einen parallel zur Motorachse verlaufenden Zapfen auf, der mit Spiel innerhalb eines Lochs der Schalteinheit einliegt. Somit wird mittels des Lochs eine Bewegung des Zapfens und somit auch die Bewegung des Steckeranschlusses bezüglich der Schalteinheit vorgegeben. Hierbei wird mittels des Zapfens zudem ein Verkippen des Steckeranschlusses vermieden oder zumindest begrenzt. Der Zapfen, der nach Art eines Stifts ausgestaltet ist, ist zweckmäßigerweise an dessen Freiende konisch ausgestaltet, sodass ein Einführen in das Loch bei Montage vereinfacht ist. Das Loch ist beispielsweise durchgängig oder zum Beispiel sacklochartig ausgestaltet. Zumindest jedoch verläuft das Loch ebenfalls parallel zur Motorachse, was einerseits eine Fertigung vereinfacht. Andererseits ist es somit ein Anordnen des Zapfens in dem Loch vereinfacht.

Beispielsweise ist der Steckeranschlusses mittels eines Kabels oder dergleichen an der Schalteinheit befestigt. Alternativ hierzu ist der Steckeranschlusses direkt an der Schalteinheit befestigt, oder zum Beispiel erfolgt eine elektrische Kontaktierung über einen Schleifkontakt. Auf diese Weise ist auch eine vergleichsweise umfassende schwimmenden Lagerung möglich. Besonders bevorzugt jedoch umfasst der Kontaktadapter einen Kontaktarm, der an dem Steckeranschlusses angebunden ist. Beispielsweise ist der Kontaktarm oder zumindest ein Teil hiervon an dem Steckeranschluss angeformt und somit zumindest teilweise einstückig mit einem Teil des Steckeranschlusses. Auf diese Weise ist eine Robustheit erhöht und eine Montage vereinfacht. Der Kontaktarm ist insbesondere senkrecht zur Motorachse angeordnet.

Der Kontaktarm ist elastisch verformbar und oder flexibel ausgestaltet. Zudem ist der Kontaktarm an der Schalteinheit befestigt, insbesondere starr. Infolgedessen erfolgt mittels eines Verformens des Kontaktarms die schwimmende Lagerung des Steckeranschlusses, wobei dieser dennoch über den Kontaktarm verliersicher an der Schalteinheit angebunden ist. Insbesondere ist hierbei ein von dem Steckeranschluss beabstandeten Bereich des Kontaktarms an der Schalteinheit befestigt, weswegen die schwimmende Lagerung verbessert ist.

Der Kontaktarm weist insbesondere einen gebogenen, beispielsweise kreisbogenförmigen, Adapterabschnitt auf, der zwischen der Anbindung an der Schalteinheit und der Anbindung an dem Steckeranschluss angeordnet ist. Vorzugsweise ist hierbei der Mittelpunkt des Kreisbogens auf der Motorachse, sodass ein verfügbarer Platz vergleichsweise effizient ausgenutzt wird und eine Montage vereinfacht ist.

Vorzugsweise weist der Kontaktadapter mehrere derartige Kontaktarme auf, sodass eine Stabilität erhöht ist. Geeigneterweise umfasst der Steckeranschluss dabei die Steckerkontakte, wobei zweckmäßigerweise jedem der Kontaktarme jeweils einer der Steckerkontakt zugewiesen ist. Besonders bevorzugt weist jeder Kontaktarm einen elektrisch leitenden Bereich auf, der insbesondere elektrisch mit den jeweiligen Steckerkontakt kontaktiert und beispielsweise an diesem angebunden ist. Besonders bevorzugt umfasst zudem jeder Kontaktarm eine elektrische Isolierung, mittels derer der jeweilige elektrisch leitende Bereich zumindest teilweise umgeben ist, und die beispielsweise mittels einer Kunststoffumspritzung bereitgestellt ist. Vorzugsweise ist die elektrische Isolierung des jeweiligen kontaktarm einstückig mit einem Gehäuse des Steckeranschlusses, mittels die Steckerkontakte gehalten sind. Auf diese Weise ist eine Montage des Motoranschlusses vereinfacht. Auch ist es somit ein elektrischer Kurzschluss der Steckerkontakte über das Lagerschild verhindert. Die Steckerkontakte sind insbesondere nach Art von männlichen Steckern, also sogenannten "male"-Steckern, ausgestaltet. Der Motoranschluss weist vorzugsweise korrespondierende Buchsen auf, innerhalb derer im Montagezustand der jeweilige Steckerkontakt zumindest teilweise einliegt und elektrisch kontaktiert ist.

Bevorzugt ist der Kontaktadapter mit der Schalteinheit elektrisch kontaktiert. Hierfür weist der Kontaktadapter zweckmäßigerweise eine Anschlussfahne auf, die sich an dem Steckeranschluss abgewandten Enden des Kontaktarms befindet. Diese ist zweckmäßigerweise mittels Hartlötens mit einem korrespondierenden Anschlusselement der Schalteinheit kontaktiert. Auf diese Weise ist eine Robustheit erhöht, wobei ein Aufwand zur Herstellung der elektrischen Kontaktierung verringert ist. Alternativ hierzu sind das Anschlusselement und die Anschlussfahne miteinander verschweißt. In einer weiteren Alternative sind die Anschlussfahne und das Anschlusselement ineinandergesteckt, sodass keine weiteren Hilfsmittel zur Herstellung der elektrischen Kontaktierung erforderlich sind. Geeigneterweise ist die Anschlussfahne mittels des elektrisch leitfähigen Bereichs/Teils des Kontaktarms erstellt, insbesondere einer Stromschiene, und die Anschlussfahne ist vorzugsweise außerhalb der Isolierung angeordnet und bildet zweckmäßigerweise den einzigen Teil des elektrisch leitfähigen Bereichs/Teils des Kontaktarms, der außerhalb der jeweiligen Isolierung angeordnet ist. Das Anschlusselement der Schalteinheit ist beispielsweise mittels eines Teils der Statorwicklung gebildet, der beispielsweise durch den etwaigen Körper der Schalteinheit hindurchragt und somit ebenfalls dieser zugeordnet ist. Bevorzugt jedoch ist das Anschlusselement mittels zumindest eines Teils einer der etwaigen Stromschienen gebildet, sodass eine Robustheit erhöht ist. Auch erfolgt somit eine mechanische Stabilisierung des Steckeranschlusses über die Kontaktarm mittels des Anschlusselements, sodass eine Robustheit erhöht ist, wobei eine Anzahl an benötigten Bauteilen verringert ist

Beispielsweise ist die Öffnung vergleichsweise groß ausgestaltet, sodass auch bei großen Fertigungstoleranzen stets eine Positionierung des Steckeranschlusses innerhalb der Öffnung möglich ist. Besonders bevorzugt weist der Kontaktadapter jedoch Mittel zur Positionierung des Steckeranschlusses in der Öffnung auf. Mit anderen Worten dienen die Mittel der Positionierung und bevorzugt der Ausrichtung des Steckeranschlusses in der Öffnung. Aufgrund der Mittel ist es somit auch eine Wahl von vergleichsweise großen Fertigungstoleranzen für die einzelnen Bestandteile des Elektromotors möglich, wobei dennoch sichergestellt ist, dass der Steckeranschluss innerhalb der Öffnung positioniert wird. Hierbei sind lediglich bei den Mitteln vergleichsweise geringe Fertigungstoleranzen vorzusehen.

Zweckmäßigerweise ist dabei der Steckeranschlusses schwimmend gelagert und/oder der Kontaktarm ist vorhanden. **In** diesem Fall erfolgt zum Beispiel aufgrund der Mittel eine Verformung des oder der Kontaktarme bei Montage, wobei die Anbindung des Kontaktadapters an der Schalteinheit nicht beschädigt wird. Zweckmäßigerweise verbleibt dabei auch die elektrische Kontaktierung erhalten.

Beispielsweise umfassen die Mittel einen Zapfen oder dergleichen, der in eine entsprechende Kontur des Lagerschilds eingreift oder mit diesen verrastet. Besonders bevorzugt jedoch umfassen die Mittel außenseitig an dem Steckeranschluss angeformte und parallel zur Motorachse verlaufende Quetschrippen. Diese werden ebenfalls innerhalb der Öffnung positioniert, wobei mittels der Quetschrippen der Steckeranschluss in der Öffnung ausgerichtet wird. Geeigneterweise liegen hierfür die Quetschrippen mechanisch direkt an dem Rand der Öffnung an. Hierbei erfolgt beispielsweise ein teilweises Verformen der Quetschrippen, insbesondere wenn vergleichsweise hohe Fertigungstoleranzen vorherrschen. Aufgrund der Quetschrippen wird dabei eine Beschädigung des Steckeranschlusses vermieden. Bevorzugt sind die Quetschrippen endseitig konisch oder abgeflacht ausgestaltet, insbesondere an dem der Schalteinheit abgewandten Ende. Infolgedessen ist ein Einführen in die Öffnung vereinfacht, wobei dennoch ein vergleichsweise exaktes Positionieren in des Steckeranschlusses innerhalb der Öffnung erfolgt. Zusammenfassen erfolgt aufgrund des mechanischen Kontakts der Quetschrippen mit dem Rand der Öffnung eine Positionierung des Steckeranschlusses, wobei zum Beispiel die Quetschrippen teilweise verformt werdenden. Zumindest jedoch erfolgt die Positionierung/Ausrichtung des Steckeranschlusses.

Geeigneterweise sind die Quetschrippen derart ausgebildet, dass bei Einführen des Steckeranschlusses in die Öffnung parallel zur Motorachse die Quetschrippen sukzessive in mechanischen Kontakt mit dem Rand der Öffnung gelangen, zumindest wenn bereits eine exakte Ausrichtung vorherrscht. Hierfür sind die Quetschrippen insbesondere derart ausgebildet, dass nach Beenden des Einführens diese einen unterschiedlichen Überstand parallel zur Motorachse über den Rand aufweisen. Mit anderen Worten weisen die Quetschrippen eine unterschiedliche Höhe parallel zur Motorachse über den Rand auf. Geeigneterweise ist die Dicke der Quetschrippen, also deren Ausdehnung senkrecht zur Motorachse, gleich oder zumindest nach dem etwaigen konischen/abgeflachten Abschnitt konstant. Infolgedessen wird der Steckeranschlusses mittels einer der Quetschrippen zunächst in einer Dimension und anschließend mittels einer anderen Quetschrippe in einer anderen Dimension ausgerichtet, sodass einerseits ein Verkippen vermieden ist. Andererseits ist ein Kraftaufwand zum Einführen des Steckeranschlusses in die Öffnung verringert.

Beispielsweise weist der Kontaktadapter zwei oder mehr derartige Quetschrippen auf. Geeigneterweise weisen die Mittel drei entsprechende Quetschrippen auf. Besonders bevorzugt sind die Quetschrippen derart ausgebildet, dass zunächst bezüglich der Motorachse eine Ausrichtung in tangentialer Richtung, anschließend in der Radialrichtung und bevorzugt anschließend in radialer und tangentialer Richtung erfolgt.

Vorzugswiese weisen die Mittel auch weitere Quetschrippen auf, wobei ein Teil der Quetschrippen derart ausgebildet ist, dass diese gleichzeitig in mechanischem Kontakt mit dem Rand der Öffnung gelangen. Mit anderen Worten ist zumindest eine Gruppe gebildet, bei der die Quetschrippen beim Einführen im Wesentlichen gleichzeitig in Kontakt mit dem Rand der Öffnung gelangen, sodass ein Verkippen des Steckeranschlusses aufgrund einer lediglich einseitigen Kraftausübung vermieden ist. Jedoch ist auch weiterhin zumindest eine Quetschrippe vorhanden, bei der davor oder erst im Anschluss hieran der mechanische Kontakt mit dem Rand beim Einführen erfolgt.

Besonders bevorzugt umfasst der Steckeranschluss eine Steckaufnahme, die sich auf der der Schalteinheit abgewandten Seite befindet und parallel zur Motorachse verläuft. Die Steckaufnahme, die insbesondere nach Art eines Lochs oder einer Bohrung ausgestaltet ist, dient der vorübergehenden Aufnahme eines Positionierwerkzeugs und ist hierfür geeignet, insbesondere vorgesehen und eingerichtet. Insbesondere ist die Steckaufnahme im Montagezustand, also nach Abschluss der Herstellung oder Montage des Elektromotors nicht weiter genutzt und verbleibt beispielsweise frei. Die Steckaufnahme ist geeigneterweise zwischen den etwaigen Steckerkontakten angeordnet, sodass ein vorhandener Platz vergleichsweise effizient ausgenutzt wird. Die Steckaufnahme, die als Positionierbohrung dient, ist beispielsweise durchgängig oder bevorzugt sacklochartig ausgestaltet, sodass bei Aufnahme des Positionierwerkzeugs eine Beschädigung der (darunter liegenden) Schalteinheit vermieden ist.

Zur Montage wird insbesondere zunächst das Positionierwerkzeugs durch die Öffnung des Lagerschilds in die Steckaufnahme geführt, sodass der Steckeranschluss geeignet bezüglich der Öffnung ausgerichtet wird. Im Anschluss hieran wird das Lagerschild bezüglich des Positionierwerkzeugs uns des Steckeranschlusses bewegt, sodass der Steckeranschlusses durch die Öffnung geführt wird. Die Anordnung und die Position des Steckeranschlusses bezüglich des Positionierwerkzeugs hingegen werden zweckmäßigerweise nicht verändert. Aufgrund des Positionierwerkzeugs ist ein Verhaken des Steckeranschluss mit dem Rand der Öffnung und auch Verkippen des Steckeranschlusses vermieden. Insbesondere ist das Positionierwerkzeugs nach Art eines Stifts ausgestaltet und vorzugsweise freiendseitig konisch, sodass das Einführen in die Steckaufnahme vereinfacht ist. Alternativ oder in Kombination hierzu ist die Steckaufnahme öffnungsseitig aufgeweitet. Nach Abschluss der Positionierung des Steckeranschlusses innerhalb der Öffnung wird das Positionierwerkzeug insbesondere entfernt. Somit kann dieses bei einem nachfolgenden Montageprozess erneut verwendet werden. Vorzugsweise sind die Mittel zur Positionierung des Steckeranschlusses vorhanden, geeigneterweise die Quetschrippen. Dabei erfolgt mittels des Positionierwerkzeugs, insbesondere eine Grobpositionierung, wobei mittels der Quetschrippen die abschließende Positionierung erfolgt.

Das Verfahren dient der Montage eines Elektromotors eines Kraftfahrzeugs. Der Elektromotor weist dabei einen eine Statorwicklung aufweisenden Stator und einen Rotor sowie eine Schalteinheit als auch einen Kontaktadapter für einen elektrischen Motoranschluss auf. Der Stator und der Rotor sind konzentrisch zu einer Motorachse in einem Motorgehäuse angeordnet, das mit einem senkrecht zur Motorachse angeordneten Lagerschild verschlossenen ist. Die Schalteinheit ist auf den Stator aufgesetzt und mit der Statorwicklung elektrisch kontaktiert, wobei der Kontaktadapter an der Schalteinheit angebunden und mit dieser elektrisch kontaktiert ist. Ein Steckeranschluss des Kontaktadapters ist in einer Öffnung des Lagerschildes angeordnet.

Gemäß dem Verfahren, also bei bzw. zur Montage des Elektromotors, wird zunächst die Schalteinheit auf den Stator aufgesetzt und mit der Statorwicklung elektrisch kontaktiert. Hierfür wird beispielsweise die Schalteinheit auf Enden der etwaigen elektrischen Spulen aufgesetzt, die somit endseitig in entsprechende Aufnahmen der Schalteinheit eingeführt werden, insbesondere parallel zur Motorachse. Nachfolgend wird geeigneterweise die Schalteinheit parallel zu der Motorachse verdreht, wobei die eingeführten Teile der Statorwicklung geklemmt werden. Zumindest erfolgt bevorzugt ein Bewegen der auf Enden der etwaigen elektrischen Spulen in einen Bereich der Aufnahmen mit einem verringerten Durchmesser, sodass eine Stabilisierung erfolgt. Ferner erfolgt ein elektrisches Kontaktieren der Schalteinheit mit der Statorwicklung, wofür insbesondere die etwaigen Stromschienen der Schalteinheit mit den in den Aufnahmen eingeführten Enden der elektrischen Spulen verschweißt oder verlötet werden.

Zudem wird der Kontaktadapter an der Schalteinheit angebunden und mit dieser elektrisch kontaktiert. Vorzugsweise erfolgt eine Befestigung des Kontaktadapters an der Schalteinheit, insbesondere der etwaigen Kontaktarme. Zum Beispiel wird hierfür der Kontaktadapter, also zumindest ein Teil hiervon, wie die Kontaktarme, mit der Schalteinheit verschweißt oder verlötet, geeigneterweise mit einer entsprechenden Stromschiene der Schalteinheit. Dabei ist zweckmäßigerweise jeder Stromschiene jeweils einer der etwaigen Kontaktarme zugeordnet.

Das Aufsetzen der Schalteinheit auf den Stator und die elektrische Kontaktierung mit der Statorwicklung erfolgt in einer Ausführungsform vor dem Anbinden des Kontaktadapters an der Schalteinheit und der elektrischen Kontaktierung hiermit. In einer Alternative, erfolgt zunächst das Anbinden und die elektrische Kontaktierung des Kontaktadapters an der Schalteinheit, und erst im Anschluss hieran wird die Schalteinheit auf den Stator aufgesetzt und mit der Statorwicklung elektrisch kontaktiert.

In einem nachfolgenden Arbeitsschritt wird der Stator, an dem bereits die Schalteinheit aufgesetzt ist, an der der Kontaktadapter angebunden ist, konzentrisch zu der Motorachse in dem Motorgehäuse angeordnet. Geeigneterweise weist die Schalteinheit oder der Stator das Loch auf, mittels dessen eine Positionierung innerhalb des Motorgehäuses erfolgt, das insbesondere topfförmig ausgestaltet ist. Dabei wird beispielsweise der Stator zunächst innerhalb Motorgehäuses konzentrisch zu der Motorachse angeordnet und nachfolgend mittels des Werkzeugs ausgerichtet. Bevorzugt jedoch erfolgt das Anordnen des Stators in dem Motorgehäuse mittels des Werkzeugs, sodass ein ausgerichtetes Anordnen in dem Motorgehäuse erfolgt. Insbesondere wird hierbei zunächst das Motorgehäuse erwärmt, sodass sich dieses ausdehnt. Nachfolgend wird der Stator ausgerichtet in dem geweiteten Motorgehäuse angeordnet, das anschließend abgekühlt wird. Auf diese Weise schrumpft das Motorgehäuse, sodass der Stator sicher in dem Motorgehäuse gehalten ist. Alternativ oder in Kombination hierzu erfolgt zusätzlich eine Befestigung des Stators in dem Motorgehäuse mittels Befestigungsmitteln und/oder eines Klebers.

Nachfolgend wird das Motorgehäuse mit dem Lagerschild verschlossenen. Hierbei ist an dem Lagerschild der Rotor gehalten, insbesondere mittels des an dem Lagerschild befestigten Lagers. Beim Verschließen des Motorgehäuses mit dem Lagerschild wird der Rotor konzentrisch zu der Motorachse in dem Motorgehäuse angeordnet, insbesondere lediglich mit Ausnahme eines Teils der etwaigen Rotorwelle. Zum Verschließen wird das Lagerschild insbesondere parallel zur Motorachse auf das Motorgehäuse zu bewegt, und insbesondere in die Öffnung des Motorgehäuses eingesetzt. Hierbei wird der Steckeranschlusses in der Öffnung des Lagerschilds angeordnet. Vorzugsweise erfolgt beim Verschließen des Motorgehäuses mit dem Lagerschilds oder davor ein Ausrichten des Steckeranschlusses, sodass dieser stets in der Öffnung des Lagerschilds angeordnet/positioniert wird. Besonders bevorzugt wird hierbei das Positionierwerkzeugs herangezogen, das, bevor das Motorgehäuse mittels des Lagerschilds verschlossen wird, durch die Öffnung des Lagerschilds geführt und in der Steckaufnahme positioniert wird. Insbesondere wird dabei mittels des Positionierwerkzeugs auch das Lagerschild gehalten, weswegen die Anzahl an benötigten Bauteilen verringert ist. Nach dem Verschließen des Motorgehäuses mittels des Lagerschild wird das Lagerschild zweckmäßigerweise an dem Motorgehäuse befestigt.

Vorzugsweise sind die Mittel zur Positionierung des Steckeranschlusses innerhalb der Öffnung vorhanden. Dabei wird beim Einführen des Steckeranschlusses in die Öffnung der Kontaktadapter, nämlich der Steckeranschluss, in einer ersten Axialposition gegenüber dem Lagerschild in einer Tangentialrichtung bezüglich der Motorachse ausgerichtet wird, wobei in dieser Position der Kontaktadapter, vorzugsweise eine der Quetschrippen das Lagerschild berührt. Dahingegen ist zumindest eine der Quetschrippen noch von dem Rand der Öffnung beabstandet, beispielsweise in einer Axialrichtung, also in einer Richtung parallel zur Motorachse. In einer zweiten Axialposition gegenüber dem Lagerschild, die sich von der ersten Axialposition unterscheidet, wird der Kontaktadapter gegenüber dem Lagerschild in Radialrichtung bezüglich der Motorachse ausgerichtet, insbesondere wenn der in Tangentialrichtung ausgerichtete Kontaktadapter das Lagerschild berührt. In der zweiten Axialposition erfolgt insbesondere ein mechanischer Kontakt einer weiteren Quetschrippen mit dem Rand der Öffnung. In einer dritten Axialposition wird der Kontaktadapter, vorzugsweise der Steckeranschluss, in der Öffnung des Lagerschildes, insbesondere symmetrisch, vorzugsweise unter Anlage am Lagerschild, radial und/oder tangential ausgerichtet. In der dritten Axialposition erfolgt geeigneterweise ein mechanischer Kontakt einer weiteren Quetschrippen mit dem Rand der Öffnung.

Das Nebenaggregat ist ein Bestandteil eines Kraftfahrzeugs, das beispielsweise ein Nutzkraftwagen ist, wie ein Bus oder ein Lastkraftwagen (Lkw). Besonders bevorzugt ist das Nebenaggregat im Montagezustand ein Bestandteil eines Personenkraftwagens (Pkw). Das Nebenaggregat dient hierbei nicht direkt dem Vortrieb des Kraftfahrzeugs, sondern beispielsweise dem Betrieb eines Hauptantriebs, der Bereitstellung von Komfortfunktionen und/oder der Einstellung einer Bewegungsrichtung des Kraftfahrzeugs.

Besonders bevorzugt ist das Nebenaggregat ein Bremskrafterzeuger. Hierbei wird bei Betrieb des Elektromotors mittels des Bremskrafterzeuger insbesondere ein Druck in einem Bremsflüssigkeitssystem erhöht. Das Bremsflüssigkeitssystem umfasst dabei insbesondere einen Pumpraum des Bremskrafterzeugers, geeigneterweise einen Ausgleichsraum und vorzugsweise mehrere Bremskolben, wobei insbesondere jedem Rad des Kraftfahrzeugs zumindest ein Bremskolben zugeordnet ist. Geeigneterweise sind jedem Rad mehrere Bremskolben zugeordnet, die insbesondere an einer Bremszange oder einem Bremssattel angeordnet sind.

Beispielsweise ist der Bremskrafterzeuger elektromechanisch ausgestaltet und wirkt somit nach Art eines Bremskraftverstärkers. Hierbei wird eine mechanische Bewegung, die insbesondere aufgrund einer Betätigung eines Fußpedals durch einen Nutzer hervorgerufen wird, mittels des Bremskrafterzeugers unterstützt, sodass die seitens des Nutzers aufzubringende Kraft reduziert ist. Beispielsweise erfolgt die Unterstützung derart, dass die aufzubringende Kraft Im Wesentlichen stets gleich ist, unabhängig von dem aktuellen Zustand des Nebenaggregats. In einer Alternative ist der Bremskrafterzeuger elektrohydraulisch ausgestaltet ist. Hierbei ist keine mechanische Kopplung mit einem etwaigen Fußpedal vorhanden, und der Betrieb des Elektromotors erfolgt insbesondere lediglich anhand von elektrischen Signalen, die zum Beispiel mittels eines Wegsensors generiert werden, der dem Fußpedal zugeordnet ist. Da keine mechanische Kopplung mit Eingabegeräten, die von dem Nutzer bedienbar sind, vorhanden ist, ist es möglich, den Bremskrafterzeuger unabhängig hiervon zu betreiben, sodass mittels dessen auch die Funktion eines Antiblockiersystems, einer Antischlupfregelung, einer elektronischen Stabilitätskontrolle und/oder einer elektromotorisch betätigten Bremskraftverteilung zumindest teilweise übernommen werden kann.

Zumindest weist das Nebenaggregat einen Elektromotor auf, der einen eine Statorwicklung aufweisenden Stator und einen Rotor sowie eine Schalteinheit als auch einen Kontaktadapter für einen elektrischen Motoranschluss aufweist. Der Stator und der Rotor sind konzentrisch zu einer Motorachse in einem Motorgehäuse angeordnet, das mit einem senkrecht zur Motorachse angeordneten Lagerschild verschlossenen ist. Die Schalteinheit ist auf den Stator aufgesetzt und mit der Statorwicklung elektrisch kontaktiert, wobei der Kontaktadapter an der Schalteinheit angebunden und mit dieser elektrisch kontaktiert ist. Ein Steckeranschluss des Kontaktadapters ist in einer Öffnung des Lagerschildes angeordnet.

Ferner betrifft die Erfindung ein Kraftfahrzeug mit einem derartigen Nebenaggregat.

Die im Zusammenhang mit dem Elektromotor erläuterten Weiterbildungen und Vorteile sind sinngemäß auch auf das Verfahren / das Nebenaggregat / das Kraftfahrzeug sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Kraftfahrzeug mit einem elektrohydraulischen Bremskrafterzeuger,
- Fig. 2: schematisch in einer Schnittdarstellung den elektrohydraulischen Bremskrafterzeuger, der einen Elektromotor aufweist,
- Fig. 3: in einer Explosionsdarstellung den Elektromotor, der einen Stator und einen Rotor sowie eine Schalteinheit als auch einen Kontaktadapter umfasst,
- Fig. 4: ein Verfahren zur Montage eines Elektromotors,
- Fig. 5: während der Montage des Elektromotors perspektivisch den Stator, auf den die Schalteinheit aufgesetzt wird,
- Fig. 6, 7: jeweils perspektivisch den Kontaktadapter,
- Fig. 8, 9: ausschnittsweise perspektivisch bzw. in einer Schnittdarstellung den an der Schalteinheit angebundenen Kontaktadapter,
- Fig. 10: perspektivisch den in einem Motorgehäuse angeordneten Stator,

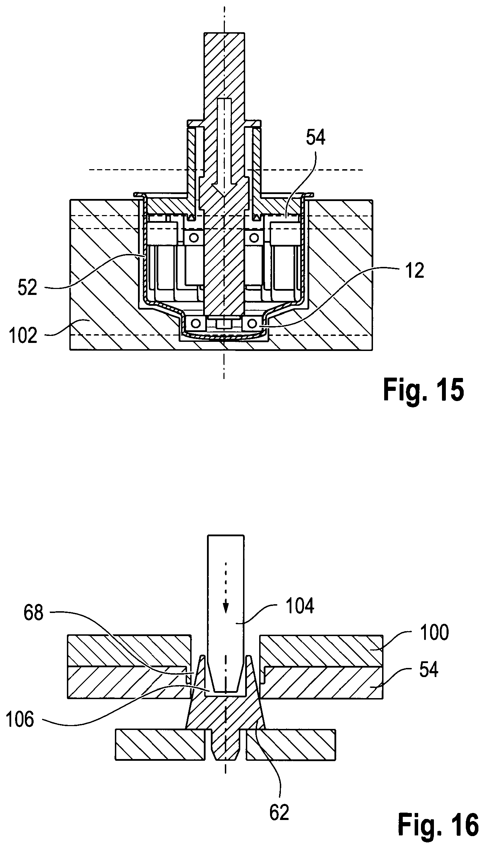

- Fig. 11-16: jeweils in einer Schnittdarstellung die Montage eines Lagerschilds an dem Motorgehäuse mittels eines Werkzeugs, das ein Positionierwerkzeugs umfasst,
- Fig. 17: während der Montage des Elektromotors perspektivisch einen Steckeranschluss des Kontaktadapters, der in einer Öffnung des Lagerschildes angeordnet wird,
- Fig. 18, 19: jeweils perspektivisch den in der Öffnung des Lagerschildes angeordneten Steckeranschluss,
- Fig. 20, 21: jeweils das Entfernen des Werkzeugs von dem Elektromotor, und
- Fig. 22: perspektivisch den montierten Elektromotor.

Einander entsprechende Teile sind in allen Figuren mit den gleichen Bezugszeichen versehen.

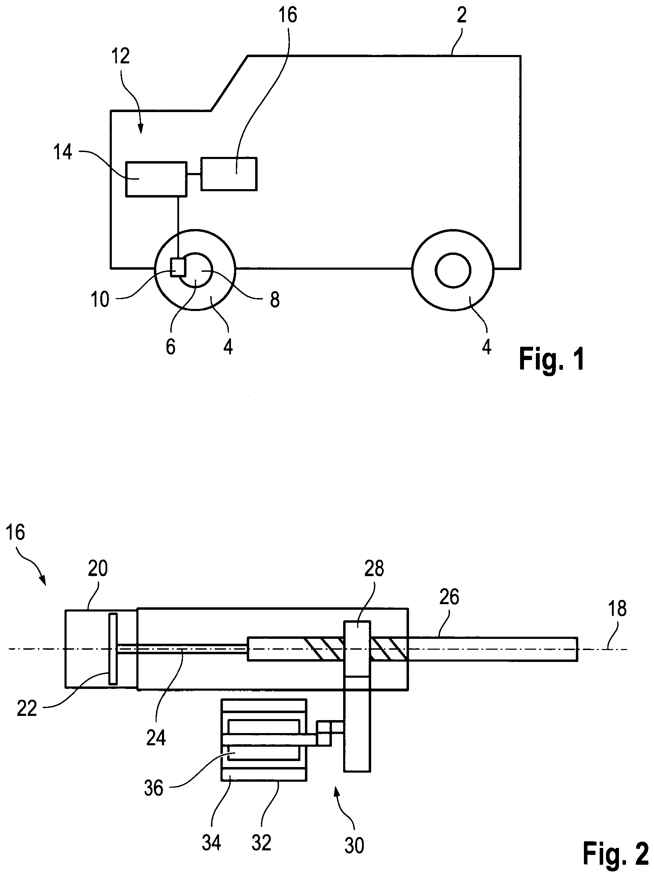

**In** Figur 1 ist schematisch vereinfacht ein Kraftfahrzeug 2 in Form eines Personenkraftwagens (Pkw) dargestellt. Das Kraftfahrzeug 2 weist mehrere Räder 4 auf, mittels derer ein Kontakt zu einer nicht näher dargestellten Fahrbahn erfolgt. Einige der Räder 4 sind mittels eines nicht gezeigten Hauptantriebs angetrieben. Zum Abbremsen weist das Kraftfahrzeug 2 mehrere Bremsen 6 auf, von denen lediglich eine einzige dargestellt ist. Jede der Bremsen 6 umfasst eine Bremsscheibe 8, die drehfest mit dem jeweils zugeordneten Rad 4 verbunden ist. Karosserieseitig fest ist ein Bremssattel 10 der Bremse 6 gehalten, der mehrere Bremskolben aufweist, die nicht näher dargestellt sind.

Die Bremskolben sind ein Bestandteil eines Bremsflüssigkeitssystems 12, das einen Ausgleichsbehälter 14 aufweist, der fluidtechnisch mit den Bremskolben gekoppelt ist. Ferner ist mit dem Ausgleichsbehälter 14 ein Nebenaggregat 16 in Form eines elektrohydraulischen Bremskrafterzeugers gekoppelt. Das Bremsflüssigkeitssystem 12 ist mit einer Bremsflüssigkeit befüllt, und bei Betrieb des (elektrischen/elektromotorischen) Nebenaggregats 16, also des elektrohydraulischen Bremskrafterzeugers, wird ein Druck in dem Bremsflüssigkeitssystem 12 erhöht, sodass über den Ausgleichsbehälter 14 die Bremskolben betätigt werden. Infolgedessen werden an dem Bremssattel 10 befestigte Bremsbeläge gegen die zugeordnete Bremsscheibe 8 gepresst, sodass das Kraftfahrzeug 2 abgebremst wird.

In Figur 2 ist in einer Schnittdarstellung entlang einer Längsachse 18 das Nebenaggregat 16, also der elektrohydraulische Bremskrafterzeuger, dargestellt. Dieses weist einen Pumpraum 20 auf, innerhalb dessen ein Arbeitskolben 22 angeordnet und mittels der Seitenwand des Pumpraums 20 entlang der Längsachse 18 geführt ist. Der Arbeitskolben 22 reicht bis zu den Innenwänden des Pumpraums 20, sodass dieser mittels des Arbeitskolben 22 in zwei Teile unterteilt ist. Einer der Teile ist über einen nicht näher dargestellten Ausgang mit dem Ausgleichsbehälter 14 fluidtechnisch verbunden und vollständig mit der Bremsflüssigkeit befüllt. Bei Bewegen des Arbeitskolben 22 in dem Pumpraum 20 wird somit die Menge der darin angeordneten Bremsflüssigkeit verändert.

Der Arbeitskolben 22 ist über eine Verbindungsstange 24, die parallel zur Längsachse 18 angeordnet ist, an einer Eingangsstange 26 befestigt, die sich ebenfalls entlang der Längsachse 18 erstreckt, und die mittels einer nicht näher dargestellten Lagerung entlang der Längsachse 18 verschiebbar gelagert ist. Hierbei ist jedoch die Eingangsstange 26 drehfest gelagert, sodass eine Rotation der Eingangsstange 26 vermieden ist.

Die Eingangsstange 26 ist außenverzahnt, und auf diese ist ein Antriebszahnrad 28 aufgesetzt, das wiederum innenverzahnt ist. Die Eingangsstange 26 sowie des Antriebszahnrad 28 sind somit nach Art einer Spindel ausgestaltet. Zusätzlich ist das Antriebszahnrad 28 außenverzahnt sowie in Eingriff mit einem Getriebe 30. Das Getriebe 30 ist mittels eines Elektromotors 32 angetrieben, der als bürstenloser Gleichstrommotor (BLDC) ausgestaltet ist.

Wenn der Elektromotor 32 bestromt wird, wird über das Getriebe 30 das Antriebszahnrad 28 gedreht. Aufgrund der Verzahnung mit der Eingangsstange 26 erfolgt auf diese Weise ein Aufbringen einer Kraft auf die Eingangsstange 26 entlang der Längsachse 18. Aufgrund der Kraftausübung wird der Arbeitskolben 22 in dem Pumpraum 20 bewegt. Infolgedessen wird die Bremsflüssigkeit aus dem Pumpraum 20 herausgedrückt. Und daher die Bremsen 6 betätigt. Der Elektromotor 32 wird hierbei betrieben, wenn ein mechanisch nicht mit dem Nebenaggregat 16 gekoppeltes, nicht näher dargestelltes Fußpedal von einem Fahrer betätigt wird, das mittels eines entsprechenden Sensors erfasst wird. Auch ist es möglich, das Nebenaggregat 16, also den elektrohydraulischen Bremskrafterzeuger, völlig unabhängig von der Betätigung des Fußpedals zu betätigen. Folglich erfolgt ein Abbremsen des Kraftfahrzeugs 2 unabhängig von der Betätigung des Fußpedals, beispielsweise im Rahmen einer Notbremsung oder bei einem automatischen/autonomen Betrieb des Kraftfahrzeugs 2.

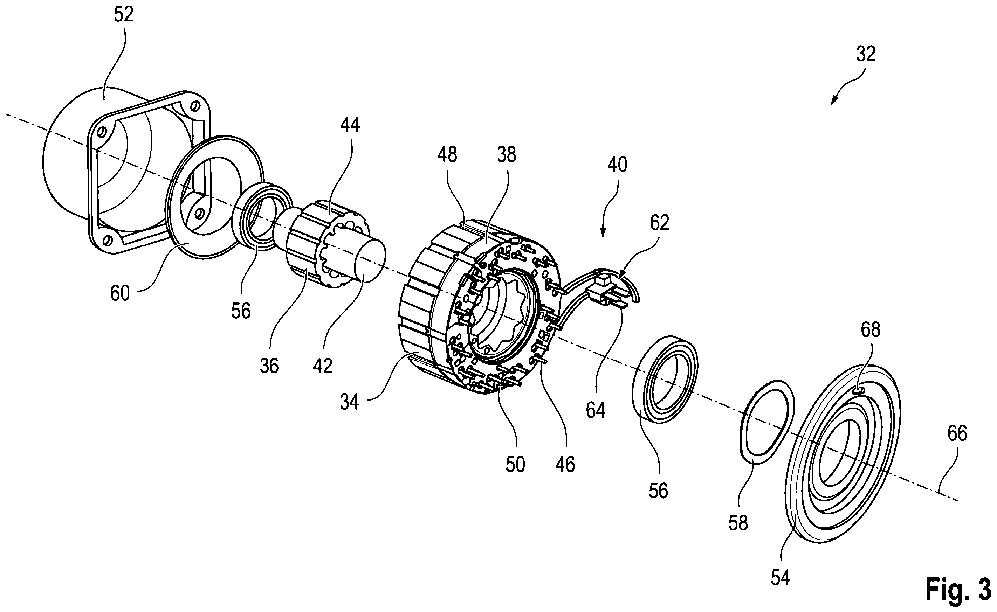

Der in Fig. 3 in einer Explosionsdarstellung gezeigte Elektromotor 32 weist einen Stator 34 und einen Rotor 36 sowie eine ringförmige Schalteinheit 38 und einen Kontaktadapter 40 auf. Ein hohlzylindrisches Blechpaket des Rotors 36 sitzt wellenfest auf einer Motor- oder Rotorwelle 42, die ebenfalls hohlzylindrisch ist. An dem Blechpaket ist umfangseitig eine Anzahl an Permanentmagneten 44 befestigt. Der Stator 34 des elektronische kommutierten Elektromotors 32 trägt eine Statorwicklung 46 in Form einer Anzahl von (elektrischen) Spulen 48. Diese sind mittels der Schalteinheit 38 miteinander bzw. untereinander elektrisch verschaltet, beispielsweise unter Herstellung (Bildung) einer Dreieck- oder Sternschaltung. Die Schalteinheit 38 weist eine Anzahl an Anschlusskontakten oder -fahnen 50 auf, von denen hier der Übersichtlichkeit halber nur eine einzelne bezeichnet ist.

Der Elektromotor 32 weist zudem ein topfförmiges Motorgehäuse 52 und ein Lagerschild 54 auf. Dieses verschließt im montierten Zustand des Elektromotors 32 das Motorgehäuse 52. Ferner weist der Elektromotor 32 im Ausführungsbeispiel zwei Lager 56, nämlich Kugellager, auf. Eine ringförmige Wellfederscheibe 58 dient zur Erzeugung einer Anstell- oder Axialkraft auf das lagerschildseitige Lager 56. Eine im Montagezustand des Elektromotors 32 am Gehäuseboden des Motorgehäuses 52 angeordnete Ringscheibe 60 dient beispielsweise zur Isolierung und/oder Dämpfung des Stators 34 innerhalb des Motorgehäuses 52.

Der Kontaktadapter 40 weist einen Steckeranschluss 62 mit Steckerkontakten (Male-Kontakten) 64 auf. Für den dreiphasigen Elektromotor 32 sind drei Steckerkontakte 64 vorgesehen. Das Lagerschild 54 weist eine bezüglich einer Motorachse 66 radial nach außen versetzte Öffnung (Stecköffnung) 68 auf, wobei mittels der Lager 12 der Rotor 36 um die Motorachse 68 drehbar gelagert ist. Im Montagezustand des Elektromotors 32 durchdringen die Steckerkontakte 64 des Kontaktadapters 40 die lagerschildseitige Öffnung 68. Dabei sitzt der Steckeranschluss 62 des Kontaktadapters 40 in dieser lagerschildseitigen Öffnung 68 ein.

Die Steckerkontakte 64 sind im Montagezustand von entsprechenden Buchsen eines Motoranschlusses gehalten, über die auch eine elektrische Kontaktierung erfolgt. Dabei wird der Steckeranschluss 62, nämlich der durch dieses Lagerschild 64 hindurchgeführte Teil, mittels des Motoranschlusses mechanisch gehalten, sodass eine stabile Verbindung zwischen dem Steckeranschluss 62 und dem Motoranschluss vorliegt. Über den Motoranschluss erfolgt bei Betrieb des Elektromotors 32 eine Bestromung des Kontaktadapters 40, der somit der Verbindung mit dem elektrischen Motoranschluss dient.

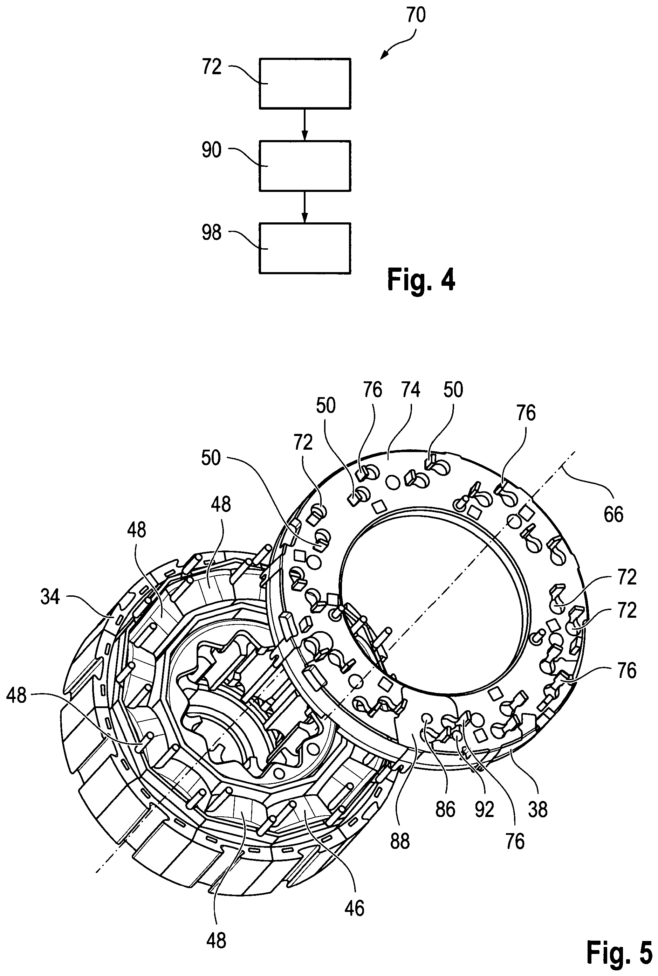

In Figur 4 ist ein Verfahren 70 zur Montage des Elektromotors 32 und dargestellt. In einem ersten Arbeitsschritt 72 wird auf den in Figur 5 perspektivisch gezeigten Rotor 34, der hohlzylindrisch und konzentrisch zu der Motorachse 66 ausgebildet ist, auf dessen eine Stirnseiten die Schalteinheit 38 aufgesetzt. Die Schalteinheit 38 wird hierfür parallel zur Motorachse 66 bewegt, zu der diese ebenfalls konzentrisch ausgestaltet ist. Dabei werden die Freienden jeder der elektrischen Spulen 48 durch entsprechende Aufnahmen 72 in einem Körper 74 der Schalteinheit 38 geführt. Der Körper 74 ist aus einem Kunststoff erstellt, und mittels dessen sind mehrere Stromschienen 76 gehalten, die aus einem Kupfer erstellt sind.

Nach dem Aufzusetzen der Schalteinheit 38 auf den Stator 34 werden die durch die Aufnahmen 72 geführten Enden der elektrischen Spulen 48 mit einer der Stromschienen 76 verschweißt oder hartverlötet, mittels deren Enden jeweils zwei der Anschlusselemente 50 gebildet sind, von denen jedes jeweils einer der Aufnahmen 72 zugeordnet ist. Zusammenfassend wird somit die Schalteinheit 38 auf den Stator 34 aufgesetzt und mit der Statorwicklung 46 elektrisch kontaktiert, wobei die Schalteinheit 38 aufgrund des Verschweißens oder Hartlötens auch an dem Stator 34 gehalten ist.

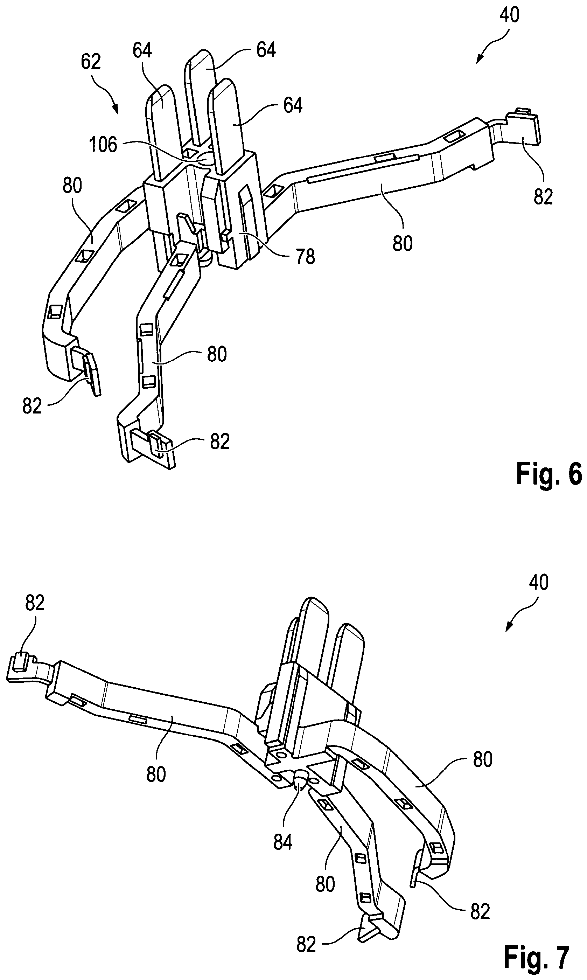

Zudem wird der perspektivisch in den Figuren 6 und 7 dargestellte Kontaktadapter 40 an der Schalteinheit 38 angebunden und mit dieser elektrisch kontaktiert. Die Schalteinheit 40 weist, wie bereits ausgeführt, den Steckeranschluss 62 mit den drei Steckerkontakten 64 auf, die aus einem Kupfer gefertigt sind. Diese sind innerhalb eines Gehäuses 78 des Steckeranschlusses 62 gehalten, das aus einem Kunststoff erstellt ist. Bei der Herstellung werden die Steckerkontakt 64 mittels des Kunststoffs umspritzt. An das Gehäuse 78 des Steckeranschlusses 62 sind insgesamt drei Kontaktarme 80 angeformt, nämlich eine Isolierung des jeweiligen Kontaktarms 80, die somit einstückig mit dem Gehäuse 78 ist. Jeder Kontaktarme 80 weist eine mittels der Isolierung umgebene Stromschiene auf, die an einem Ende innerhalb des Gehäuses 78 mit einem zugeordneten Steckerkontakt 64 elektrisch kontaktiert ist. Das verbleibende Ende ist aus der Isolierung zur Ausbildung einer Anschlussfahne 82 herausgeführt, die somit das dem Steckeranschlusses 62 abgewandte Ende des jeweiligen Kontaktarms 80 bildet. Zwischen der Anschlussfahne 82 und dem Steckeranschluss 62 ist jeder Kontaktarm 80 bogenförmig ausgestaltet, und Materialien jedes Kontaktarms 80 sind derart ausgewählt, dass diese flexibel und elastisch ausgestaltet sind.

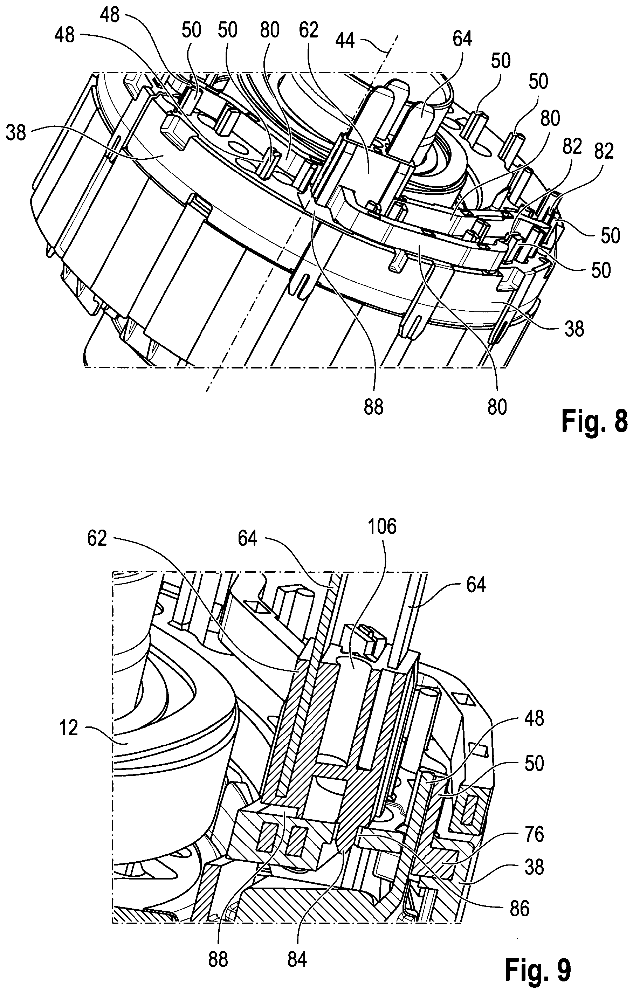

Zur Montage wird hierbei ein Zapfen 84 des Steckeranschlusses 62, der sich auf der den Steckerkontakten 64 gegenüberliegenden Seite befindet, in einem parallel zur Motorachse 66 verlaufenden Loch 86 der Schalteinheit 38 sich mit Spiel angeordnet, das innerhalb einer Vertiefung 88 der Schalteinheit 38 angeordnet ist. In die Vertiefung 88 wird dabei auch der Steckeranschluss 62 mit der den Steckerkontakten 64 gegenüberliegenden Seite mit Spiel eingesetzt, wie in Figur 8 ausschnittsweise gezeigt. Jede Anschlussfahne 82 wird an einem der Anschlusselemente 50 mittels Hartlötens befestigt und somit auch elektrisch kontaktiert. Eine weitere Befestigung des Kontaktadapters 40 an der Schalteinheit 38 erfolgt hingegen nicht. Aufgrund der flexiblen und elastischen Ausgestaltung der Kontaktarme sind von dem Kontaktadapter 40 somit lediglich die Anschlussfahnen 82 ortsfest an der Schalteinheit 38 gehalten.

Der Zapfen 84 ist, wie in Figur 9 in einer Schnittdarstellung parallel zur Motorachse 44 gezeigt, mit Spiel innerhalb des Lochs 86 der Schalteinheit 38 angeordnet, sodass zwischen dem parallel zur Motorachse 44 angeordneten Zapfen 84 und dem Rand des parallel zur Motorachse 44 verlaufenden Lochs 86 ein Spalt oder Schlitz gebildet ist. Aufgrund dessen sowie dem Rand der Vertiefung 88 ist der Steckeranschlusses 62 schwimmend an der Schalteinheit 38 gelagert. Mittels der Vertiefung 88 sowie des Lochs 86 ist dabei der Betrag der maximalen Bewegung des Steckeranschlusses 62 bezüglich der Schalteinheit 38 senkrecht zur Motorachse 44 vorgegeben.

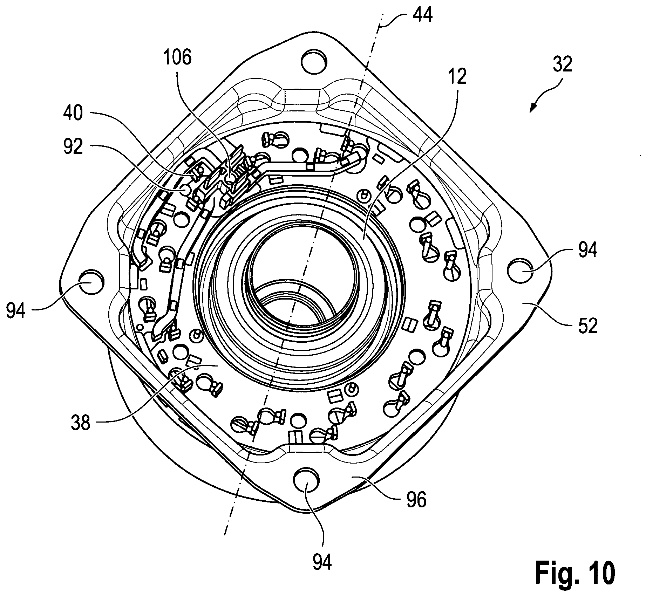

In einem sich anschließenden zweiten Arbeitsschritt 90 wird der Stator 34, an dem die Schalteinheit 38 befestigt ist, an der der Kontaktadapter 40 angebunden ist, konzentrisch zu der Motorachse 44 in dem Motorgehäuse 52 angeordnet, wie in Figur 10 gezeigt. Dort sind, wie auch in den Figuren 8 und 9, noch weitere Bestandteile des Elektromotors 32 bereits gezeigt, die jedoch zu dem Zeitpunkt des Verfahrens 70 noch nicht montiert sind, wie zum Beispiel das Lager 12.

Zum Anordnen des Stators 34 in dem Motorgehäuse 52 wird das aus einem Metall gefertigte Motorgehäuse 52 erwärmt, sodass sich dieses ausdehnt. In diesem wird anschließend der Stator 38 mit den daran befestigten Komponenten konzentrisch zur Motorachse 44 angeordnet und nachfolgend abgekühlt. Zur Ausrichtung des Stators 34 und der Schalteinheit 38 innerhalb des Motorgehäuses 52 wird ein Dorn eines nicht näher dargestellten Werkzeugs in ein parallel zur Motorachse 44 verlaufendes Loch 92 der Schalteinheit 38 eingesetzt. Das Werkzeug weist einen oder mehrere weitere Dorne auf, von denen jeder in jeweils ein Befestigungsloch 94 des Motorgehäuses 52 eingeführt wird, die an einem dem Topfboden entlang der Motorachse 44 gegenüberliegenden Flansch 96 des Motorgehäuses 52 eingebracht sind. Die insgesamt vier Befestigungslöcher 94 dienen hierbei der Aufnahme jeweils einer nicht gezeigten Schraube, mittels derer der Elektromotor 32 an weiteren Bestandteilen des Nebenaggregats 16 montiert werden kann.

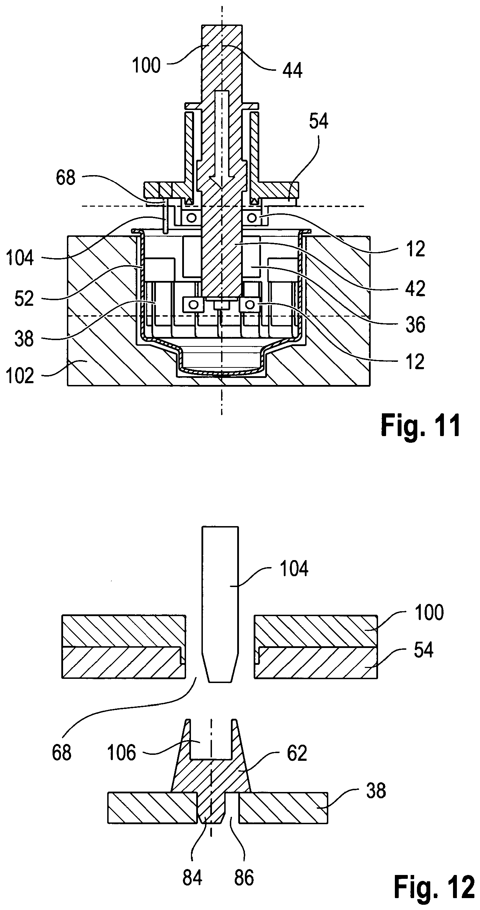

In einem dritten Arbeitsschritt 98 wird das Motorgehäuse 52 mit dem Lagerschild 54 verschlossen, wofür ein in Figur 11 in einem Schnitt entlang der Motorachse 44 dargestelltes Positionierwerkzeugs 100 verwendet wird. Mittels des Positionierwerkzeugs 100 ist dabei das zunächst Lagerschild 54 gehalten, das senkrecht zur Motorachse 44 ausgerichtet wird. An dem Lagerschild 54 ist dabei bereits das zugeordnete Lager 12 befestigt. An dem Lager 12 ist ferner die Motorwelle 42 des Rotors 36 gehalten, an der das Blechpaket 36 und die Permanentmagneten 44 befestigt sind. An dem dem Lagerschild 54 gegenüberliegenden Enden der Rotorwelle 42 ist das verbleibende Lager 12 befestigt. Zusammenfassend ist somit an dem Lagerschild 54 der Rotor 36 gehalten, und bei dem Einführen in das Motorgehäuse 52 wird der Rotor 36 konzentrisch zu der Motorachse 44 entlang dieser in das Motorgehäuse 52 hineinbewegt, sodass der Rotor 36 umfangsseitig von dem Stator 38 umgeben ist. Das Motorgehäuse 52 ist hierbei innerhalb einer Halterung 102 drehfeste gehalten.

Das Positionierwerkzeugs 100 weist zudem einen Dorn 104 auf, der innerhalb der Öffnung 68 des Lagerschilds 54 angeordnet ist. In Figur 12 ist der Dorn 104 schematisch vereinfacht dargestellt, der parallel zur Motorachse 44 angeordnet ist, und an dem der Schalteinheit 54 zugewandten Freiende konisch ist. Hierbei befindet sich der Dorn 106 oberhalb, also in einer Richtung parallel zur Motorachse 44 verschoben, des Steckeranschlusses 62, der schwimmend an der Schalteinheit 38 gelagert ist, die das Loch 86 aufweist, innerhalb derer der Zapfen 84 des Steckeranschlusses 62 einliegt. Auf der dem Zapfen 84 gegenüberliegenden Seite, also auf der der Schalteinheit 38 abgewandten Seite, weist der Steckeranschluss 62 eine parallel zur Motorachse 44 verlaufende Steckaufnahme 106 auf, die sacklochartig ausgestaltet ist. Die Steckaufnahme 106 befindet sich dabei zwischen den Steckerkontakten 64 und ist lediglich mittels des Kunststoffs des Steckeranschlusses 62 gebildet.

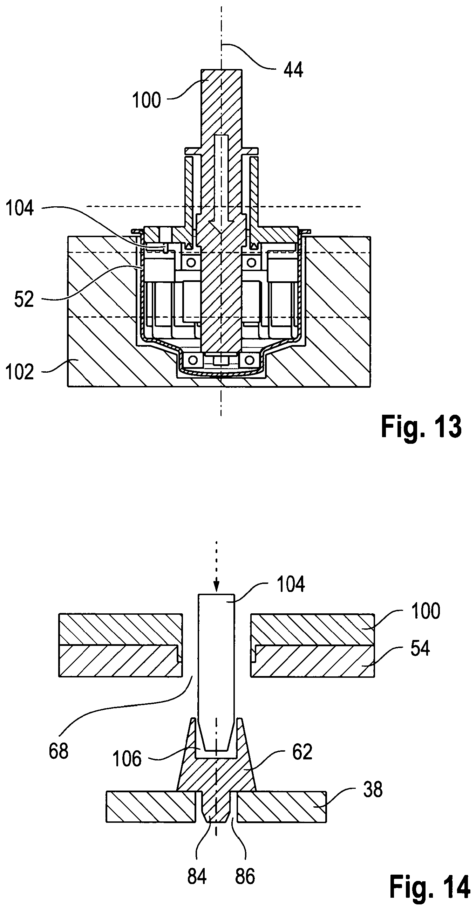

Beim Bewegen des Positionierwerkzeugs 100 in Richtung der Halterung 102, und somit auf das Motorgehäuse 52 zu, taucht der Dorn 104 freiendseitig in die Steckaufnahme 106 ein, wie in den Figuren 13 und 14 dargestellt. Hierfür wird der Dorn 104 beispielsweise bezüglich der weiteren Bestandteile des Positionierwerkzeugs 100 zusätzlich parallel zur Motorachse 44 verschoben. Aufgrund der konischen Ausgestaltung des Dorns 104 ist dabei ein Eintauchen auch bei einem Versatz des Steckeranschlusses 62 ermöglicht. Aufgrund der schwimmenden Lagerung des Steckeranschlusses 62 bezüglich der Schalteinheit 38 wird bei dem Eintauchen der Steckeranschluss 62 senkrecht zur Motorachse 44 versetzt und somit ausgerichtet. Dabei ist das Lagerschild 54 noch von dem Steckeranschluss 62 beabstandet. Das Positionierwerkzeug 100, nämlich der Dorn 104 diente dabei der Grobpositionierung des Steckeranschlusses 62 unterhalb der Öffnung 68.

Bei einem weiteren Annähern des Positionierwerkzeugs 100 an die Halterung 102 gelangt das Lagerschild 54 in mechanischen Kontakt mit dem Motorgehäuse 52, sodass das Motorgehäuse 52 mittels des senkrecht zur Motorachse 44 angeordneten Lagerschilds 54 verschlossen wird. Dabei gelangt das von dem Lagerschild 54 beabstandete Lager 12 in eine Montageposition an dem Boden des topfförmigen Motorgehäuses 52 und wird dort mittels eines Presssitzes befestigt. Ferner taucht der Steckeranschluss 62, der bereits mittels des Positionierwerkzeugs 100 grob positioniert wurde, in die Öffnung 68 des Lagerschilds 54 ein und durchdringt diese teilweise. Infolgedessen wird der Steckeranschluss 62 des Kontaktadapters 40 in der Öffnung 68 des Lagerschilds 54 angeordnet und verbleibt auch dort.

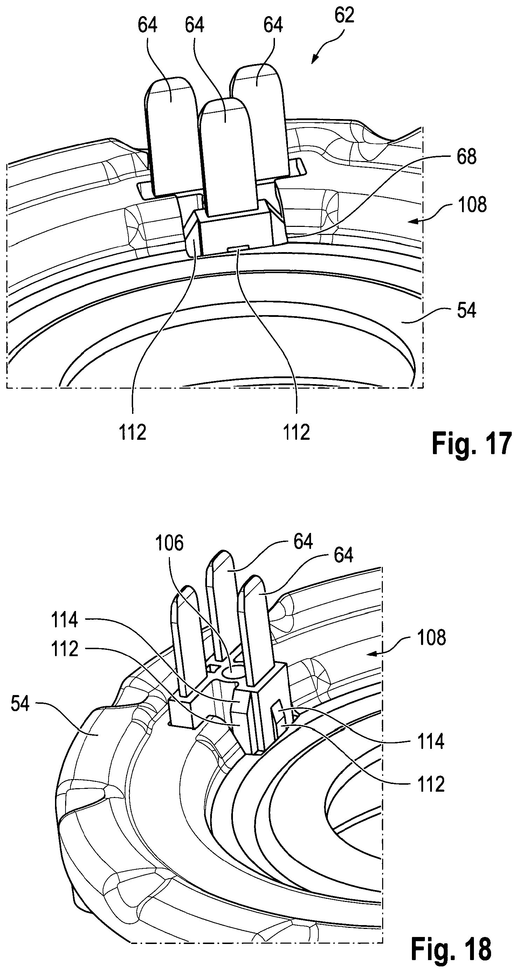

Bei dem Eindringen des Steckeranschluss 62 in die Öffnung 68 des Lagerschilds 54 treten zunächst die Freienden der Steckeranschlüsse 64 durch die Öffnung hindurch, wie in Figur 17 perspektivisch gezeigt. Nachfolgend durchdringt auch teilweise der Kunststoffteil des Steckeranschlusses 62 die Öffnung 68, die im Bereich einer Stufe 180 des Lagerschilds 54 angeordnet ist, und diese überdeckt. Mittels der Stufe 108 ist dabei das Lagerschild 54 in zwei unterschiedliche, konzentrisch zur Motorachse 44 angeordnete Ringbereiche unterteilt, die bezüglich der Motorachse 44 versetzt sind, wobei einer der Ringbereich den anderen umgibt.

Der Kontaktadapter 40 umfasst ferner Mittel 110 zur Positionierung des Steckeranschlusses 62 in der Öffnung 68. Die Mittel 110 weisen mehrere Quetschrippen 112 auf, die außenseitig an dem Steckeranschluss 62 angeformt sind und parallel zur Motorachse 44 verlaufen. Die Quetschrippen 112 sind dabei an unterschiedlichen Seiten des Kunststoffteils des Steckeranschlusses 62 angeformt und weisen jeweils an dem den Steckerkontakten 64 zugewandten Ende eine Abflachung 114 auf, sodass das Einführen in die Öffnung 68 erleichtert ist. Zudem sind die Quetschrippen 112 derart ausgebildet, dass bei Einführen des Steckeranschlusses 62 in die Öffnung 68 parallel zur Motorachse 44 Teile davon sukzessive in mechanischen Kontakt mit dem Rand der Öffnung 68 gelangen.

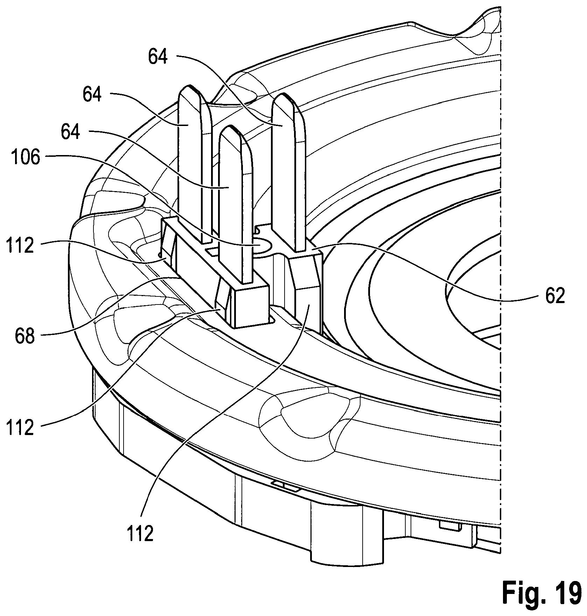

Hierbei sind zwei der Quetschrippen 112 dabei derart ausgebildet, dass diese gleichzeitig in mechanischem Kontakt mit dem Rand der Öffnung 68 gelangen, wobei mittels dieser eine Ausrichtung des Steckeranschlusses 62 in tangentialer Richtung bezüglich der Motorachse 44 erfolgt. In Figur 17 ragen diese beiden Quetschrippen 112 bereits durch die Öffnung 68. Nachfolgend gelangt eine weitere der Quetschrippen 112, die in Figur 17 bereits sichtbar ist, und die an der der Motorachse 44 zugewandten Seite des Steckeranschlusses 62 angeformt ist, durch die Öffnung 68 hindurch. Mittels dieser erfolgt eine radiale Ausrichtung des Steckeranschlusses 62. Nachfolgend gelangen wiederum zwei der Quetschrippen 112 in mechanischem Kontakt mit dem Rand der Öffnung 68, wie in Figur 19 dargestellt. Diese befinden sich an der der Motorachse 44 abgewandten Seite des Steckeranschlusses 62. Mittels dieser Quetschrippen 112 erfolgt sowohl eine radiale als auch eine tangentiale Ausrichtung des Steckeranschlusses 62 innerhalb der Öffnung 68. Zusammenfassend wird aufgrund der Quetschrippen 112 der Steckeranschluss 62, je nach Axialposition des Lagerschilds 58 bezüglich des Motorgehäuses 52, unterschiedlich ausgerichtet, wobei teilweise ein Verformen der Quetschrippen 112 erfolgt. Das Ausrichten, das aufgrund der schwimmenden Lagerung des Steckeranschlusses 62 möglich ist, ist hierbei eine Feinpositionierung, bei der ein etwaiger noch bestehender Versatz zwischen dem Steckeranschluss 62 und der Öffnung 68 ausgeglichen wird. Zusammenfassend erfolgt mittels der Quetschrippen 112 eine Feinpositionierung des Steckeranschlusses 62 in der Öffnung 68, sodass sich die Steckeranschlusses 64 nach Abschluss in der gewünschten Position befinden.

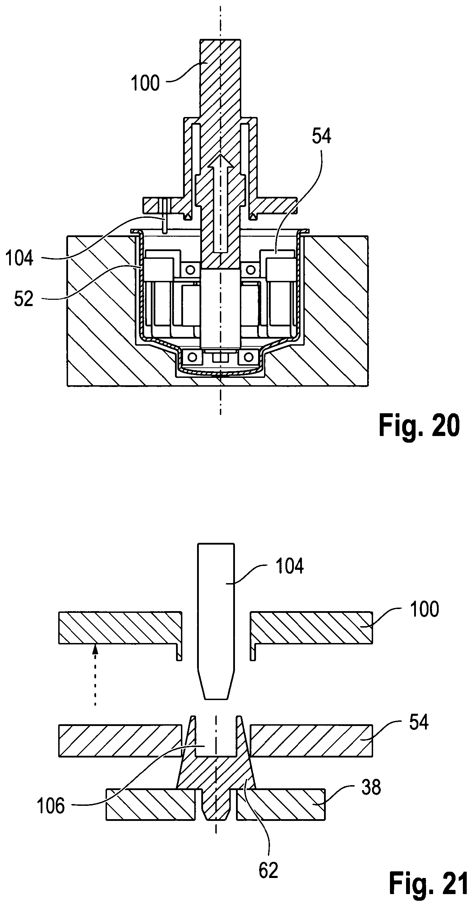

Während des sukzessiven Einführens der Quetschrippen 112 in die Öffnung 68 befindet sich der Dorn 104 noch innerhalb der Steckaufnahme 106, sodass trotz der Quetschrippen 112 und der damit auf den Steckeranschluss 62 ausgeübten Kraft ein Verkippen des Steckeranschlusses 62 vermieden wird. Nach dem das Lagerschild 54 an dem Motorgehäuse 52 anliegt und an diesem befestigt ist, wird, wie in den Figuren 20 und 21 dargestellt, das Positionierwerkzeug100 und der Dorn 104 von dem Lagerschild 54 abgehoben, das an dem Motorgehäuse 52 verbleibt. Mit anderen Worten wird der Dorn 104 des Positionierwerkzeugs 100 aus der Steckaufnahmen 106 entfernt, der folglich lediglich der vorübergehenden Aufnahme des Positionierwerkzeugs 100 dient.

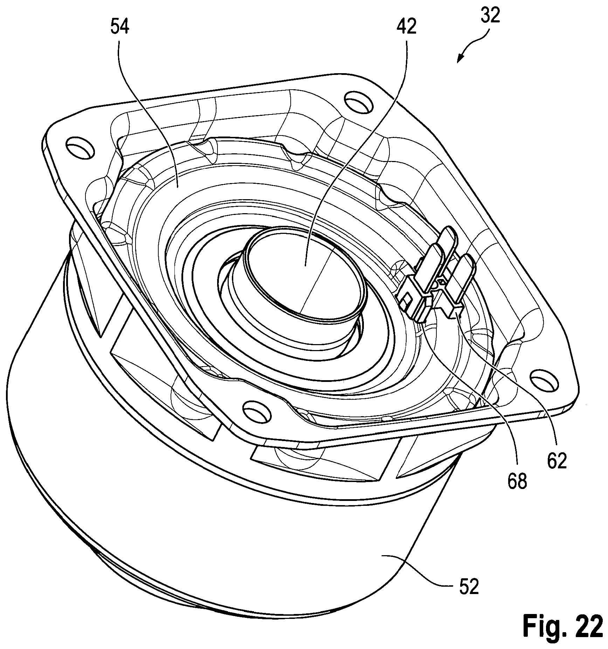

Im Anschluss hieran das Erstellen des Elektromotors 32 beendet, der in Figur 22 perspektivisch dargestellt ist. Hierbei ist das Motorgehäuse 52 mittels des Lagerschilds 54 verschlossen, und durch die Öffnung 68 ragt der Steckeranschluss 62 des Kontaktadapters 40, sodass dort der Motoranschluss trotz verschlossenem Motorgehäuse 52 aufgesteckt werden kann.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Bremse
- 8: Bremsscheibe
- 10: Bremssattel
- 12: Bremsflüssigkeitssystem
- 14: Ausgleichsbehälter
- 16: Nebenaggregat
- 18: Längsachse
- 20: Pumpraum
- 22: Arbeitskolben
- 24: Verbindungsstange
- 26: Eingangsstange
- 28: Antriebszahnrad
- 30: Getriebe
- 32: Elektromotor
- 34: Stator
- 36: Rotor
- 38: Schalteinheit
- 40: Kontaktadapter
- 42: Motorwelle
- 44: Permanentmagnet
- 46: Statorwicklung
- 48: elektrische Spule
- 50: Anschlusselement
- 52: Motorgehäuse
- 54: Lagerschild
- 56: Lager
- 58: Wellfederscheibe
- 60: Ringscheibe
- 62: Steckeranschluss
- 64: Steckerkontakt
- 66: Motorachse
- 68: Öffnung
- 70: Verfahren
- 72: Aufnahme
- 74: Körper
- 76: Stromschiene
- 78: Gehäuse
- 80: Kontaktarm
- 82: Anschlussfahne
- 84: Zapfen
- 86: Loch
- 88: Vertiefung
- 90: zweiter Arbeitsschritt
- 92: Loch
- 94: Befestigungsloch
- 96: Flansch
- 98: dritter Arbeitsschritt
- 100: Positionierwerkzeug
- 102: Halterung
- 104: Dorn
- 106: Steckaufnahme
- 108: Stufe
- 110: Mittel
- 112: Quetschrippe
- 114: Abflachung

## Patentansprüche

1. Elektromotor (32) eines Kraftfahrzeugs (2), insbesondere eines Nebenaggregats (16), mit einem eine Statorwicklung (46) aufweisenden Stator (34) als auch mit einem Rotor (36) sowie mit einer Schalteinheit (38) und mit einem Kontaktadapter (40) für einen elektrischen Motoranschluss,
- wobei der Stator (34) und der Rotor (36
- #) konzentrisch zu einer Motorachse (44) in einem Motorgehäuse (52) angeordnet sind, das mit einem senkrecht zur Motorachse (44) angeordneten Lagerschild (54) verschlossen ist,
- wobei die Schalteinheit (38) auf den Stator (34) aufgesetzt und mit der Statorwicklung (46) elektrisch kontaktiert ist,
- wobei der Kontaktadapter (40) an der Schalteinheit (38) angebunden und mit dieser elektrisch kontaktiert ist, und
- wobei ein Steckeranschluss (62) des Kontaktadapters (40) in einer Öffnung (68) des Lagerschildes (54) angeordnet ist, und
- wobei der Steckeranschluss (62) schwimmend an der Schalteinheit (38) gelagert ist.

2. Elektromotor (32) nach Anspruch 1,
**dadurch gekennzeichnet,**
**dass** die Schalteinheit (38) eine Vertiefung (88) aufweist, innerhalb derer der Steckeranschluss (62) mit Spiel angeordnet ist.

3. Elektromotor (32) nach Anspruch 1 oder 2,
**dadurch gekennzeichnet,**
**dass** der Steckeranschluss (62) einen parallel zur Motorachse (44) verlaufenden Zapfen (84) aufweist, der mit Spiel innerhalb eines Lochs (86) der Schalteinheit (38) einliegt.

4. Elektromotor (32) nach einem der Ansprüche 1 bis 3,
**dadurch gekennzeichnet,**
**dass** an dem Steckeranschluss (62) ein flexibler und/oder elastischer Kontaktarm (80) angebunden ist, der an der Schalteinheit (38) befestigt ist.

5. Elektromotor (32) nach Anspruch 4,
**dadurch gekennzeichnet,**
**dass** der Kontaktarm (80) an dem dem Steckeranschluss (62) abgewandten Ende eine Anschlussfahne (82) zur Kontaktierung aufweist, die mittels Hartlötens mit einem korrespondierenden Anschlusselement (50) der Schalteinheit (38) kontaktiert ist.

6. Elektromotor (32) nach einem der Ansprüche 1 oder 5,
**dadurch gekennzeichnet,**
**dass** der Kontaktadapter (40) Mittel (110) zur Positionierung des Steckeranschlusses (62) in der Öffnung (68) aufweist.

7. Elektromotor (32) nach Anspruch 6,
**dadurch gekennzeichnet,**
**dass** die Mittel (100) außenseitig an dem Steckeranschluss (62) angeformte und parallel zur Motorachse (44) verlaufende Quetschrippen (112) umfassen, die derart ausgebildet sind, dass bei Einführen des Steckeranschlusses (62) in die Öffnung (68) parallel zur Motorachse (44) diese sukzessive in mechanischen Kontakt mit dem Rand der Öffnung (68) gelangen.

8. Elektromotor (32) nach Anspruch 6 oder 7,
**dadurch gekennzeichnet,**
**dass** der Steckeranschluss (62) auf der der Schalteinheit (38) abgewandten Seite eine parallel zur Motorachse (44) verlaufende Steckaufnahme (106) zur vorübergehenden Aufnahme eines Positionierwerkzeugs (100) aufweist.

9. Verfahren (40) zur Montage eines Elektromotors (32) nach einem der Ansprüche 1 bis 8, bei welchem
- die Schalteinheit (38) auf den Stator (34) aufgesetzt und mit der Statorwicklung (46) elektrisch kontaktiert wird, und der Kontaktadapter (40) an der Schalteinheit (38) angebunden und mit dieser elektrisch kontaktiert wird, wobei der Steckeranschluss (62) schwimmend an der Schalteinheit (38) gelagert wird,
- der Stator (34) konzentrisch zu der Motorachse (44) in dem Motorgehäuse (52) angeordnet wird, und
- das Motorgehäuse (52) mit dem Lagerschild (54) verschlossenen wird, an dem der Rotor (36) gehalten ist, wobei der Rotor (36) konzentrisch zu der Motorachse (44) in dem Motorgehäuse (52) angeordnet wird, und wobei der Steckeranschluss (62) in der Öffnung (68) des Lagerschildes (54) angeordnet wird.

10. Nebenaggregat (16) eines Kraftfahrzeugs (2), insbesondere elektrohydraulischer Bremskrafterzeuger, mit einem Elektromotor (32) nach einem der Ansprüche 1 bis 8.

## Claims

1. Electric motor (32) of a motor vehicle (2), in particular an auxiliary unit (16), comprising a stator (34) having a stator winding (46) and also comprising a rotor (36) as well as comprising a switching unit (38) and comprising a contact adapter (40) for an electrical motor connection,
- wherein the stator (34) and the rotor (36)
- are arranged concentrically to a motor axis (44) in a motor housing (52) which is closed by an end plate (54) arranged perpendicularly to the motor axis (44),
- wherein the switching unit (38) is mounted on the stator (34) and electrically contact-connected to the stator winding (46),
- wherein the contact adapter (40) is attached to the switching unit (38) and electrically contact-connected to it, and
- wherein a plug connection (62) of the contact adapter (40) is arranged in an opening (68) in the end plate (54), and
- wherein the plug connection (62) is mounted in a floating manner on the switching unit (38).

2. Electric motor (32) according to Claim 1,
**characterized**
**in that** the switching unit (38) has a recess (88) within which the plug connection (62) is arranged with play.

3. Electric motor (32) according to Claim 1 or 2,
**characterized**
**in that** the plug connection (62) has a pin (84) which runs parallel to the motor axis (44) and is situated within a hole (86) in the switching unit (38) with play.

4. Electric motor (32) according to any of Claims 1 to 3,
**characterized**
**in that** a flexible and/or elastic contact arm (80) is attached to the plug connection (62) and is fastened to the switching unit (38).

5. Electric motor (32) according to Claim 4,
**characterized**
**in that** the contact arm (80) has a connection lug (82) at the end facing away from the plug connection (62) for contact-connection purposes, which connection lug is contact-connected to a corresponding connection element (50) of the switching unit (38) by means of brazing.

6. Electric motor (32) according to either of Claims 1 and 5,
**characterized**
**in that** the contact adapter (40) has means (110) for positioning the plug connection (62) in the opening (68).

7. Electric motor (32) according to Claim 6,
**characterized**
**in that** the means (100) comprise pinch ribs (112) which are integrally formed on the outside of the plug connection (62) and run parallel to the motor axis (44) and are formed in such a way that, when the plug connection (62) is inserted into the opening (68) parallel to the motor axis (44), they gradually come into mechanical contact with the edge of the opening (68).

8. Electric motor (32) according to Claim 6 or 7,
**characterized**
**in that** the plug connection (62) has, on the side facing away from the switching unit (38), a plug-in receptacle (106), which runs parallel to the motor axis (44), for temporarily receiving a positioning tool (100).

9. Method (40) for assembling an electric motor (32) according to any of Claims 1 to 8, in which
- the switching unit (38) is mounted on the stator (34) and electrically contact-connected to the stator winding (46), and the contact adapter (40) is attached to the switching unit (38) and electrically contact-connected to it, wherein the plug connection (62) is mounted in a floating manner on the switching unit (38),
- the stator (34) is arranged concentrically to the motor axis (44) in the motor housing (52), and
- the motor housing (52) is closed by the end plate (54) on which the rotor (36) is held, wherein the rotor (36) is arranged concentrically to the motor axis (44) in the motor housing (52), and wherein the plug connection (62) is arranged in the opening (68) of the end plate (54).

10. Auxiliary unit (16) of a motor vehicle (2), in particular electrohydraulic brake force generator, comprising an electric motor (32) according to any of Claims 1 to 8.

## Revendications

1. Moteur électrique (32) d'un véhicule automobile (2), en particulier d'un groupe auxiliaire (16), comprenant un stator (34) comportant un enroulement de stator (46) et un rotor (36), ainsi qu'une unité de commutation (38) et un adaptateur de contact (40) pour une connexion de moteur électrique,
- le stator (34) et le rotor (36)
- étant disposés de manière concentrique à un axe de moteur (44) dans un carter de moteur (52) fermé par un flasque (54) disposé perpendiculairement à l'axe du moteur (44),
- l'unité de commutation (38) étant positionnée sur le stator (34) et étant en contact électrique avec l'enroulement de stator (46),
- l'adaptateur de contact (40) étant fixé à l'unité de commutation (38) et étant en contact électrique avec celle-ci, et
- un connecteur enfichable (62) de l'adaptateur de contact (40) étant disposé dans une ouverture (68) du flasque (54), et
- le connecteur enfichable (62) étant monté de manière flottante sur l'unité de commutation (38).

2. Moteur électrique (32) selon la revendication 1,
**caractérisé en ce que**
l'unité de commutation (38) présente un évidement (88) à l'intérieur duquel le connecteur enfichable (62) est disposé avec jeu.

3. Moteur électrique (32) selon la revendication 1 ou 2,
**caractérisé en ce que**
le connecteur enfichable (62) présente un tourillon (84) s'étendant parallèlement à l'axe de moteur (44), lequel tourillon est logé avec jeu à l'intérieur d'un trou (86) de l'unité de commutation (38).

4. Moteur électrique (32) selon l'une des revendications 1 à 3,
**caractérisé en ce que**
un bras de contact (80) flexible et/ou élastique est fixé au connecteur enfichable (62) et est fixé à l'unité de commutation (38).

5. Moteur électrique (32) selon la revendication 4,
**caractérisé en ce que**
le bras de contact (80) présente, à l'extrémité tournée à l'opposé du connecteur enfichable (62), une patte de connexion (82) pour la mise en de contact, qui est en contact par brasage avec un élément de connexion (50) correspondant de l'unité de commutation (38).

6. Moteur électrique (32) selon l'une des revendications 1 ou 5,
**caractérisé en ce que**
l'adaptateur de contact (40) comprend des moyens (110) destinés au positionnement du connecteur enfichable (62) dans l'ouverture (68).

7. Moteur électrique (32) selon la revendication 6,
**caractérisé en ce que**
les moyens (100) comprennent des nervures de serrage (112) formées à l'extérieur du connecteur enfichable (62) et s'étendant parallèlement à l'axe de moteur (44), lesquelles sont conçues de telle sorte que, lors de l'insertion du connecteur enfichable (62) dans l'ouverture (68) parallèlement à l'axe de moteur (44), elles entrent progressivement en contact mécanique avec le bord de l'ouverture (68).

8. Moteur électrique (32) selon la revendication 6 ou 7,
**caractérisé en ce que**
le connecteur enfichable (62) présente, sur le côté tourné à l'opposé à l'unité de commutation (38), un logement d'enfichage (106) s'étendant parallèlement à l'axe de moteur (44) pour le logement temporaire d'un outil de positionnement (100).

9. Procédé (40) pour installer un moteur électrique (32) selon l'une des revendications 1 à 8, dans lequel
- l'unité de commutation (38) est positionnée sur le stator (34) et est mise en contact électrique avec l'enroulement de stator (46), et l'adaptateur de contact (40) est fixé à l'unité de commutation (38) et est mis en contact électrique avec celle-ci, le connecteur enfichable (62) étant monté de manière flottante sur l'unité de commutation (38),
- le stator (34) est disposé de manière concentrique à l'axe de moteur (44) dans le carter de moteur (52), et
- le carter de moteur (52) est fermé par le flasque (54) sur lequel le rotor (36) est maintenu, le rotor (36) étant disposé de manière concentrique à l'axe de moteur (44) dans le carter de moteur (52), et le connecteur enfichable (62) étant disposé dans l'ouverture (68) du flasque (54).

10. Groupe auxiliaire (16) d'un véhicule automobile (2), en particulier un servofrein électrohydraulique, comprenant un moteur électrique (32) selon l'une des revendications 1 à 8.
